# EUROPÄISCHE PATENTSCHRIFT

(11) **EP 1 192 229 B1**
(45) Veröffentlichungstag und Bekanntmachung des Hinweises auf die Patenterteilung: **08.09.2004**
(21) Anmeldenummer: 00945807.6
(22) Anmeldetag: 23.06.2000
(51) Int. Cl.: C09D 133/06, C08F 220/14, C08F 220/28

(54) **BESCHICHTUNGSSTOFF UND SEINE VERWENDUNG ZUR HERSTELLUNG VON FÜLLERSCHICHTEN UND STEINSCHLAGSCHUTZGRUNDIERUNGEN**
COATING MATERIAL AND ITS USE FOR PRODUCING FILLER COATS AND STONE IMPACT PROTECTION PRIMERS
SUBSTANCE DE REVETEMENT ET SON UTILISATION POUR LA REALISATION DE COUCHES DE CHARGE ET D'APPRETS DE RESISTANCE AUX IMPACTS DE GRAVILLONS

(30) Priorität: 30.06.1999 DE 19930067
(43) Veröffentlichungstag der Anmeldung: 03.04.2002
(73) Patentinhaber: BASF Coatings Aktiengesellschaft, 48165 Münster (DE)
(72) Erfinder: BREMSER, Wolfgang, D-48165 Münster (DE)
(74) Vertreter: Fitzner, Uwe, Dr.
(86) Internationale Anmeldenummer: PCT/EP2000/005826
(87) Internationale Veröffentlichungsnummer: WO 2001/002500

(56) Entgegenhaltungen:
- EP-A- 0 358 221
- EP-A- 0 856 533
- DE-A- 3 546 594

## Beschreibung

Die vorliegende Erfindung betrifft einen neuen Beschichtungsstoff. Außerdem betrifft die vorliegende Erfindung ein Verfahren zur Herstellung des neuen Beschichtungsstoffs. Des weiteren betrifft die vorliegende Erfindung die Verwendung des neuen Beschichtungsstoffs zur Herstellung von Füllerschichten und Steinschlagschutzgrundierungen, insbesondere für Kraftfahrzeuge. Darüber hinaus betrifft die vorliegende Erfindung neue Füller und Steinschlagschutzgrundierungen sowie die hiermit beschichteten grundierten oder ungrundienen Substrate, insbesondere Kraftfahrzeugkarosserien.

Die Bereitstellung von steinschlagfesten Beschichtungen auf metallischen Substraten ist im Bereich der Kraftfahrzeugherstellung von besonderer Bedeutung. Steinschlagfeste Beschichtungen werden insbesondere in Frontbereich sowie im Unterbodenbereich einer Kraftfahrzeugkarosserie angebracht. Ein hierfür geeigneter Beschichtungsstoff sollte aus wirtschaftlichen sowie aus ökologischen Gründen arm an oder frei von organischen Lösemitteln sein. Hierfür kommen neben Pulverbeschichtungsstoffen nur wäßrige Beschichtungsstoffe in Frage.

An Füllerschichten oder Steinschlagschutzgrundierungen werden eine Reihe von Anforderungen gestellt. Sie müssen bei einer Temperatur von 100 - 160°C einbrennbar sein und nach solchen Einbrenntemperaturen hervorragende Eigenschaften wie hohe Steinschlagbeständigkeit (besonders die Kombination von Multi- und Monoschlag), gute Haftung zur Grundierung, beispielsweise KTL, und zur Basislackierung oder Unidecklackierung, gute Fülleigenschaften (Abdeckung der Struktur des Substrats) bei einer Schichtdicke von 20 bis 35 µm sowie ein ausgezeichnetes Appearance in der abschließenden Klarlackschicht aufweisen. Die Kombination dieser Eigenschaften ist insofern schwierig zu realisieren, als es sich bei diesen Eigenschaften z.T. um einander entgegenstehende Eigenschaften handelt, bei denen die Verbesserung einer Eigenschaft automatisch eine Verschlechterung einer anderen Eigenschaft bewirkt. Solche einander entgegenstehenden oder konträren Eigenschaften sind z.B. sehr guter Multischlag und Monoschlag, niedrige Schichtdicke und sehr gute(r) Füllkraft/Decklackstand, niedrige Einbrenntemperatur und sehr guter Decklackstand sowie niedrige Einbrenntemperatur und hohe Haftung.

Wäßrige Beschichtungsstoffe, die der Herstellung von Füllerschichten oder Steinschlagschutzgrundierungen dienen, enthalten als Bindemittel beispielsweise in Wasser lösliche oder dispergierbare Polyester und/oder Polyurethane. Wäßrige Beschichtungsstoffe diese Art sind aus den Patentschriften DE-A-43 37 961, DE-A-44 38 504, DE-C-41 42 816 oder EP-A-0427 028 bekannt. Obwohl diese wäßrigen Beschichtungsstoffe und die hiermit hergestellten Füller oder Steinschlagschutzgrundierungen bereits zahlreiche Anforderungen des Marktes erfüllen, können durch sie nicht alle oben genannten einander entgegenstehenden Eigenschaften in befriedigendem Maß in einfacher Weise realisiert werden, sondern müssen durch z. T. vergleichsweise aufwendige zusätzliche Maßnahmen eingestellt werden.

Beschichtungsstoffe auf der Basis von Acrylatcopolymerisaten könnten hier eine Alternative bieten. Solche Beschichtungsstoffe werden beispielsweise in den Patentschriften EP-B-0 447 428, EP-B- 0 593 454, EP-B-0 052 776 oder der DE-A-42 04 518 beschrieben.

Die Herstellung von Acrylatcopolymerisaten kann nach allgemein gut bekannten Polymerisationsverfahren in Masse, Lösung oder Emulsion erfolgen. Polymerisationsverfahren zur Herstellung von Acrylatcopolymerisaten, insbesondere Polyacrylatharzen, sind allgemein bekannt und vielfach beschrieben (vgl. z.B.: Houben Weyl, Methoden der organischen Chemie, 4. Auflage, Band 14/1, Seite 24 bis 255 (1961)).

Weitere Beispiele geeigneter Copolymerisationsverfahren für die Herstellung von Acrylatcopolymerisaten werden in den Patentschriften DE-A-197 09 465, DE-C-197 09 476, DE-A-28 48 906, DE-A-195 24 182, EP-A-0 554 783, EP-B-0 650 979 WO 95/27742, DE-A-38 41 540 oder WO 82/02387 beschrieben.

Als Reaktoren für die Copolymerisationsverfahren kommen die üblichen und bekannten Rührkessel, Rührkesselkaskaden, Rohrreaktoren, Schlaufenreaktoren oder Taylorreaktoren, wie sie beispielsweise in den Patentschriften DE-B-1 071 241 oder EP-A-0 498 583 oder in dem Artikel von K. Kataoka in Chemical Engineering Science, Band 50, Heft 9, 1995, Seiten 1409 bis 1416, beschrieben werden, in Betracht.

Die für die Herstellung der Acrylatcopolymerisate angewandte radikalische Polymerisation ist indes häufig sehr exotherm und schwer zu regeln. Für die Reaktionsführung bedeutet dies, daß hohe Konzentrationen an Monomeren und/oder die sogenannte batch-Fahrweise, bei der die gesamte Menge der Monomeren in einem wäßrigen Medium vorgelegt, emulgiert und anschließend auspolymerisiert wird, vermieden werden müssen. Auch die gezielte Einstellung definierter Molekulargewichte, Molekulargewichtsverteilungen und anderer Eigenschaften bereitet häufig Schwierigkeiten. Die gezielte Einstellung eines bestimmten Eigenschaftsprofils der Acrylatcopolymerisate ist aber für ihre Verwendung als Bindemittel in Beschichtungsstoffen, die der Herstellung von Füllerschichten und Steinschlagschutzgrundierungen dienen, von großer Bedeutung, da hierdurch das anwendungstechnische Eigenschaftsprofil der Beschichtungsstoffe und der Beschichtungen direkt beeinflußt werden kann.

Es hat daher nicht an Versuchen gefehlt, die radikalische Copolymerisation olefinisch ungesättigter Monomerer gezielt zu regeln.

So beschreibt die internationale Patentanmeldung WO 98/01478 ein Verfahren, bei dem die Copolymerisation in Gegenwart eines radikalischen Starters und einer Thiocarbonylthio-Verbindung als Kettenübertragungsmittel umgesetzt wird.

Die internationale Patentanmeldung WO 92/13903 beschreibt ein Verfahren zur Herstellung von Copolymerisaten mit einem niedrigen Molekulargewicht durch Radikalkettenpolymerisation in Gegenwart eines Gruppenübertragungsmittels, das eine Kohlenstoff-Schwefel-Doppelbindung aufweist. Diese Verbindungen wirken nicht nur als Kettenübertragungsmittel, sondern auch als Wachstumsregler, so daß nur Copolymerisate mit niedrigem Molekulargewicht resultieren.

Aus der internationalen Patentanmeldung WO 96/15157 geht ein Verfahren zur Herstellung von Copolymerisaten mit vergleichsweise enger Molekulargewichtsverteilung hervor, bei dem ein Monomer mit einem Vinylterminierten Makromonomeren in Anwesenheit eines radikalischen Initiators umgesetzt wird.

Außerdem geht aus der internationalen Patentanmeldung WO 98/37104 die Herstellung von Acrylatcopolymerisaten mit definierten Molekulargewichten durch radikalische Polymerisation in Gegenwart eines Kettenübertragungsmittels mit einer C-C-Doppelbindung und mit Resten, die diese Doppelbindung bezüglich der radikalischen Anlagerung von Monomeren aktivieren, hervor.

Trotz bedeutsamer Fortschritte auf diesem Gebiet fehlt es noch immer an einem universell einsetzbaren Verfahren zur kontrollierten radikalischen Polymerisation, das in einfacher Weise chemisch strukturierte Polymerisate, insbesondere Acrylatcopolymerisate, liefert und mit dessen Hilfe das Eigenschaftsprofil der Polymerisate im Hinblick auf ihre Anwendung in Beschichtungsstoffen, die der Herstellung von Füllern und Steinschlagschutzgrundierungen dienen, gezielt eingestellt werden kann.

Deshalb ist es auch bei den Beschichtungsstoffen auf der Basis von Acrylatcopolymerisaten nach wie vor notwendig, durch andere, z. T. aufwendigere, Maßnahmen die im eingangs genannten Sinne einander entgegenstehenden Eigenschaften problemlos in dem vom Markt geforderten Niveau einzustellen.

Aufgabe der vorliegenden Erfindung ist es, einen neuen Beschichtungsstoff bereitzustellen, der sich insbesondere für die Herstellung von Füllerschichten und Steinschlagschutzgrundierungen eignet, eine Alternative zu den bisher bekannten Systemen bietet und in seinem Eigenschaftsprofil breit variiert werden kann, so daß auch im eingangs genannten Sinne einander entgegenstehende Eigenschaften problemlos in dem vom Markt geforderten Niveau eingestellt werden können.

Dies soll in einfacher Weise dadurch bewerkstelligt werden, daß das Eigenschaftsprofil der Beschichtungsstoffe insbesondere durch die Verwendung chemisch strukturierter Copolymerisate, die durch radikalischen Polymerisation erhältlich sind, gezielt eingestellt wird. Diese chemisch strukturierten Copolymerisate sollen außerdem als Reibharze verwendbar sein, die es in vorteilhafter Weise gestatten, besonders gut einmischbare Pigmentpasten für die zur Herstellung neuer farb- und/oder effektgebender Mehrschichtlackierungen verwendeten Füller, Basislacke und Klarlacke bereitzustellen.

Demgemäß wurde die neue Verwendung eines Coplymerisats (A) in einem Beschichtungsstoff, der der Herstellung von Füllern und Steinschlagschutzgrundierungen dient, gefunden, wobei das Copolymerisat (A) durch radikalische Polymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I

   **R**^{**1**}**R**^{**2**}**C=CR**^{**3**}**R**^{**4**} (I),

   worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
in einem wäßrigen Medium herstellbar ist.

Im folgenden wird die neue Verwendung des Copolymerisats (A) als "erfindungsgemäße Verwendung" bezeichnet.

Außerdem wurde der neue Beschichtungsstoff gefunden, enthaltend
A) als Bindemittel oder eines der Bindemittel mindestens ein Copolymerisat, das durch radikalische Polymerisation von
   a) mindestens einem olefinisch ungesättigten Monomer und
   b) mindestens einem vom olefinisch ungesättigten Monomer (a) verschiedenen olefinisch ungesättigten Monomer der allgemeinen Formel I

      **R**^{**1**}**R**^{**2**}**C=CR**^{**3**}**R**^{**4**} (I),

      worin die Reste R¹, R² , R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen;
   in einem wäßrigen Medium herstellbar ist;
   und
B) mindestens ein Pigment und/oder einen Füllstoff, wobei das Pigment/Bindemittel-Verhältnis (B) : (A) bei 4 : 1 bis 1 : 4 liegt.

Im folgenden wird der neue Beschichtungsstoff als "erfindungsgemäßer Beschichtungsstoff" bezeichnet.

Außerdem wurde das neue Verfahren für die Herstellung einer farb-und/oder effektgebende Mehrschichtlackierung ML auf einem grundierten oder ungrundierten Substrat durch
- (I): Herstellen einer Füllerlackschicht durch Applikation eines Füllers auf das Substrat,
- (II): Härtung der Füllerlackschicht, wodurch die Füllerschicht FL resultiert,
- (III): Herstellen einer Unidecklackschicht durch Applikation eines Unidecklacks auf die Füllerschicht FL und
- (IV): Härtung der Unidecklackschicht DL, wodurch die Unidecklackierung DL resultiert,
oder
- (I): Herstellen einer Füllerlackschicht durch Applikation eines Füllers auf das Substrat,
- (II): Härtung der Füllerlackschicht, wodurch die Füllerschicht FL resultiert,
- (III): Herstellen einer Basislackschicht durch Applikation eines Basislacks auf die Füllerschicht FL,
- (IV): Trocknend der Basislackschicht,
- (V): Herstellen einer Klarlackschicht durch Applikation eines Klarlacks auf die Basislackschicht und
- (V1): gemeinsame Härtung der Basislackschicht und der Klarlackschicht, wodurch die Basislackierung BL und die Klarlackierung KL resultieren,
gefunden, bei dem als Füller der erfindungsgemäße Beschichtungsstoff verwendet wird.

Im folgenden wird das neue Verfahren zur Herstellung einer farb- und/oder effektgebenden Mehrschichtlackierung ML auf einem grundierten oder ungrundierten Substrat als "erfindungsgemäßes Verfahren" bezeichnet.

Im Hinblick auf den Stand der Technik war es überraschend, daß die komplexe Aufgabe, die der vorliegenden Erfindung zugrunde lag, mit Hilfe der erfindungsgemäßen Verwendung, des erfindungsgemäßen Beschichtungsstoffs, insbesondere des wäßrigen erfindungsgemäßen Beschichtungsstoffs, und des erfindungsgemäßen Verfahrens gelöst werden konnte. Insbesondere überraschte, daß die erfindungsgemäßen Füllerschichten oder Steinschlagschutzgrundienuigen FL selbst bei vergleichsweise niedrigen Einbrenntemperaturen hervorragende Eigenschaften wie hohe Steinschlagbeständigkeit (besonders die Kombination von Multi- und Monoschlag), gute Haftung zur Grundierung, beispielsweise KTL, und zur Basislackierung BL oder Unidecklackierung DL und gute Fülleigenschaften (Abdeckung der Struktur des Substrats) bei einer Schichtdicke von 20 - 35µm aufweisen. Dieses hervorragende Eigenschaftsprofil strahlt auch auf die Mehrschichtlackierungen ML aus, die die erfindungsgemäßen Füllerschichten oder Steinschlagschutzgrundierungen FL enthalten. Sie weisen ein ausgezeichnetes Appearance in der abschließenden Klarlackschicht KL auf und sind insgesamt von hervorragender optischer Qualität.

Erfindungsgemäß wird mindestens ein Copolymerisat (A) als Bindemittel (A) oder eines der Bindemittel (A) in dem erfindungsgemäßen Beschichtungsstoff verwendet.

Erfindungsgemäß wird das Copolymerisat (A) durch radikalische Polymerisation mindestens eines olefinisch ungesättigten Monomeren (a) und mindestens eines olefinisch ungesättigten Monomeren (b), welches von dem Monomeren (a) verschieden ist, hergestellt.

Beispiele geeigneter Monomere (a) sind
a1) im wesentlichen säuregruppenfreien (Meth)acrylsäureester wie (Meth)Acrylsäurealkyl- oder -cycloalkylester mit bis zu 20 Kohlenstoffatomen im Alkylrest, insbesondere Methyl-, Ethyl-, Propyl-, n-Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethyltriglykol(meth)acrylat und Methoxyoligoglykol(meth)acrylat mit einem Molekulargewicht Mn von vorzugsweise 550 oder andere ethoxylierte und/oder propoxylierte hydroxylgruppenfreie (Meth)acrylsäurederivate. Diese können in untergeordneten Mengen höherfunktionelle (Meth)Acrylsäurealkyloder-cycloalkylester wie Ethylengylkol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3-oder -1,4-diol-di(meth)acrylat; Trimethylolpropan-di- oder -tri(meth)acrylat; oder Pentaerythrit-di-, -tri- oder -tetra(meth)acrylat enthalten. Im Rahmen der vorliegenden Erfindung sind hierbei unter untergeordneten Mengen an höherfunktionellen Monomeren solche Mengen zu verstehen, welche nicht zur Vernetzung oder Gelierung der Copolymerisate (A) fuhren.
a2) Monomere, welche mindestens eine Hydroxylgruppe, Aminogruppe, Alkoxymethylaminogruppe oder Iminogruppe pro Molekül tragen und im wesentlichen säuregruppenfrei sind, wie Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinsich ungesättigten Carbonsäure mit einem Alkylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycycloalkylester wie 1,4-Bis(hydroxymethyl)cyclohexan-, Octahydro-4,7-methano-1H-indendimethanol- oder Methylpropandiolmonoacrylat, -monomethacrylat, -monoethacrylat, -monocrotonat, -monomaleinat, -monofumarat oder -monoitaconat; oder Umsetzungsprodukte aus cyclischen Estern, wie z.B. epsilon-Caprolacton und diesen Hydroxyalkyl- oder -cycloalkylestern; oder olefinisch ungesättigte Alkohole wie Allylalkohol oder Polyole wie Trimethylolpropanmono- oder diallylether oder Pentaerythritmono-, -di- oder -triallylether (hinsichtlich dieser höherfunktionellen Monomeren (a2) gilt das für die höherfunktionellen Monomeren (a1) Gesagte sinngemäß); N,N-Dimethylaminoethylacrylat, N,N-Diethylaminoethylmethacrylat, Allylamin oder N-Methyliminoethylacrylat oder N,N-Di(methoxymethyl)aminoethylacrylat und -methacrylat oder N,N-Di(butoxymethyl)aminopropylacrylat und-methacrylat; Monomere dieser Art werden bevorzugt für die Herstellung von selbst vernetzenden Bestandteilen (A) verwendet.
a3) Monomere, welche mindestens eine Säuregruppe, die in die entsprechende Säureaniongruppe überführbar ist, pro Molekül tragen, wie Acrylsäure, Methacrylsäure, Ethacrylsäure, Crotonsäure, Maleinsäure, Fumarsäure oder Itaconsäure; olefinisch ungesättigte Sulfon- oder Phosphonsäuren oder deren Teilester; oder Maleinsäuremono(meth)acryloyloxyethylester, Bernsteinsäuremono(meth)acryloyloxyethylester oder Phthalsäuremono(meth)acryloyloxyethylester.
a4) Vinylester von in alpha-Stellung verzweigten Monocarbonsäuren mit 5 bis 18 Kohlenstoffatomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester (a4) können aber auch auf an sich bekannte Weise aus den Säuren hergestellt werden, z.B. indem man die Säure mit Acetylen reagieren läßt. Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, insbesondere aber Versatic®-Säuren, eingesetzt.
a5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird.
a6) Cyclische und/oder acyclische Olefine wie Ethylen, Propylen, But-1-en, Pent-1-en, Hex-1-en, Cyclohexen, Cyclopenten, Norbonen, Butadien, Isopren, Cylopentadien und/oder Dicyclopentadien.
a7) (Meth)Acrylsäureamide wie (Meth)Acrylsäureamid, N-Methyl-, N,N-Dimethyl-, N-Ethyl-, N,N-Diethyl-, N-Propyl-, N,N-Dipropyl-, N-Butyl-, N,N-Dibutyl-, N-Cyclohexyl-, N,N-Cyclohexyl-methyl- und/oder N-Methylol-, N,N-Dimethylol-, N-Methoxymethyl-, N,N-Di(methoxymethyl)-, N-Ethoxymethyl- und/oder N,N-Di(ethoxyethyl)-(meth)acrylsäureamid. Monomere der letztgenannten Art werden vor allem für die Herstellung von selbstvernetzenden Bestandteilen (A) verwendet.
a8) Epoxidgruppen enthaltende Monomere wie der Glycidylester der Acrylsäure, Methacrylsäure, Ethacrylsäure, Crotonsäure, Maleinsäure, Fumarsäure und/oder Itaconsäure.
a9) Vinylaromatische Kohlenwasserstoffe wie Styrol, alpha-Alkylstyrole, insbesondere alpha-Methylstyrol, und/oder Vinyltoluol; Vinylbenzoesäure (alle Isomere), N,N-Diethylaminostyrol (alle Isomere), alpha-Methylvinylbenzoesäure (alle Isomere), N,N-Diethylamino-alphamethylstyrol (alle Isomere) und/oder p-Vinylbenzsolsulfonsäure.
a10) Nitrile wie Acrylnitril und/oder Methacrylnitril.
a11) Vinylverbindungen, insbesondere Vinyl- und/oder Vinylidendihalogenide wie Vinylchlorid, Vinylfluorid, Vinylidendichlorid oder Vinylidendifluorid; N-Vinylamide wie Vinyl-N-methylformamid, N-Vinylcaprolactam, 1-Vinylimidazol oder N-Vinylpyrrolidon; Vinylether wie Ethylvinylether, n-Propylvinylether, Isopropylvinylether, n-Butylvinylether, Isobutylvinylether und/oder Vinylcyclohexylether; und/oder Vinylester wie Vinylacetat, Vinylpropionat, Vinylbutyrat, Vinylpivalat und/oder der Vinylester der 2-Methyl-2-ethylheptansäure.
a12) Allylverbindungen, insbesondere Allylether und -ester wie Allylmethyl-, -ethyl-, -propyl- oder -butylether oder Allylacetat, -propionat oder -butyrat.
a13) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; insbesondere Polysiloxanmakromonomere, die ein zahlenmittleres Molekulargewicht Mn von 2.000 bis 20.000, besonders bevorzugt 2.500 bis 10.000 und insbesondere 3.000 bis 7.000 und im Mittel 0,5 bis 2,5, bevorzugt 0,5 bis 1,5, ethylenisch ungesättigte Doppelbindungen pro Molekül aufweisen, wie sie in der DE-A-38 07 571 auf den Seiten 5 bis 7, der DE-A 37 06 095 in den Spalten 3 bis 7, der EP-B-0 358 153 auf den Seiten 3 bis 6, in der US-A 4,754,014 in den Spalten 5 bis 9, in der DE-A 44 21 823 oder in der internationalen Patentanmeldung WO 92/22615 auf Seite 12, Zeile 18, bis Seite 18, Zeile 10, beschrieben sind.
   und/oder
a14) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure (vgl. Monomere a2).

Jedes der vorstehend genannten Monomeren (a1) bis (a14) kann für sich alleine mit dem Monomeren (b) polymerisiert werden. Erfindungsgemäß ist es indes von Vorteil, mindestens zwei Monomere (a) zu verwenden, weil hierdurch das Eigenschaftsprofil der resultierenden Copolymerisate (A) in besonders vorteilhafter Weise sehr breit variiert und dem jeweiligen Verwendungszweck des Beschichtungsstoffs ganz gezielt angepaßt werden kann. Insbesondere können in dieser Weise in die Copolymerisate (A) funktionelle Gruppen eingebaut werden, durch die die Copolymerisate (A) hydrophil werden, so daß sie in wäßrigen Medien dispergiert oder gelöst werden können. Außerdem können funktionelle Gruppen (afg) eingebaut werden, die mit den nachstehend beschriebenen komplementären funktionellen Gruppen (cfg) der gegebenenfalls verwendeten Vernetzungsmittel (C) thermische Vernetzungsreaktionen eingehen können. Außerdem können funktionelle Gruppen angebaut werden, die dem Copolymerisat (A) selbstvernetzende Eigenschaften verleihen wie N-Methylol- oder N-Alkoxymethylgruppen.

Erfindungsgemäß resultieren ganz besondere Vorteile, wenn als Monomere (a) die Monomeren (a1) und (a2) sowie gegebenenfalls (a3) verwendet werden.

Erfindungsgemäß werden als Monomere (b) Verbindungen der allgemeinen Formel I verwendet.

In der allgemeinen Formel 1 stehen die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl-Arylalkyl- oder Arylcycloalkylreste, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen.

Beispiele geeigneter Alkylreste sind Methyl, Ethyl, Propyl, Isopropyl, n-Butyl, iso-Butyl, tert.-Butyl, Amyl, Hexyl oder 2-Ethylhexyl.

Beispiele geeigneter Cycloalkylreste sind Cyclobutyl, Cyclopentyl oder Cyclohexyl.

Beispiele geeigneter Alkylcycloalkylreste sind Methylencyclohexan, Ethylencyclohexan oder Propan-1,3-diyl-cyclohexan.

Beispiele geeigneter Cycloalkylalkylreste sind 2-, 3- oder 4-Methyl-, -Ethyl-, -Propyl- oder-Butylcyclohex-1-yl.

Beispiele geeigneter Arylreste sind Phenyl, Naphthyl oder Biphenylyl, vorzugsweise Phenyl und Naphthyl und insbesondere Phenyl.

Beispiele geeigneter Alkylarylreste sind Benzyl oder Ethylen- oder Propan-1,3-diylbenzol.

Beispiele geeigneter Cycloalkylarylreste sind 2-, 3-, oder 4-Phenylcyclohex-1-yl.

Beispiele geeigneter Arylalkylreste sind 2-, 3- oder 4-Methyl-, -Ethyl-, -Propyl- oder -Butylphen-1-yl.

Beispiele geeigneter Arylcycloalkylreste sind 2-, 3- oder 4-Cyclohexylphen- 1 -yl.

Die vorstehend beschriebenen Reste R¹, R², R³ und R⁴ können substituiert sein. Hierzu können elektronenziehende oder elektronenschiebende Atome oder organische Reste verwendet werden.

Beispiele geeigneter Substitutienten sind Halogenatome, insbesondere Chlor und Fluor, Nitrilgruppen, Nitrogruppen, partiell oder vollständig halogenierte, insbesondere chlorierte und/oder fluorierte, Alkyl-, Cycloalkyl-, Alkylcycloalkyl-, Cycloalkylalkyl-, Aryl-, Alkylaryl-, Cycloalkylaryl- Arylalkyl- und Arylcycloalkylreste, inclusive der vorstehend beispielhaft genannten, insbesondere tert.-Butyl; Aryloxy-, Alkyloxy- und Cycloalkyloxyreste, insbesondere Phenoxy, Naphthoxy, Methoxy, Ethoxy, Propoxy, Butyloxy oder Cyclohexyloxy; Arylthio-, Alkylthio- und Cycloalkylthioreste, insbesondere Phenylthio, Naphthylthio, Methylthio, Ethylthio, Propylthio, Butylthio oder Cyclohexylthio; Hydroxylgruppen; und/oder primäre, sekundäre und/oder tertiäre Aminogruppen, insbesondere Amino, N-Methylamino, N-Ethylamino, N-Propylamino, N-Phenylamino, N-Cyclohexylamino, N,N-Dimethylamino, N,N-Diethylamino, N,N-Dipropylamino, N,N-Diphenylamino, N,N-Dicyclohexylamino, N-Cyclohexyl-N-methylamino oder N-Ethyl-N-methylamino.

Beispiele für erfindungsgemäß besonders bevorzugt verwendete Monomere (b) sind Diphenylethylen, Dinaphthalinethylen, cis- oder trans- Stilben, Vinyliden-bis(4-N,N-dimethylaminobenzol), Vinyliden-bis(4-aminobenzol) oder Vinyliden-bis(4-nitrobenzol).

Erfindungsgemäß können die Monomeren (b) einzeln oder als Gemisch aus mindestens zwei Monomeren (b) verwendet werden.

Hinsichtlich der Reaktionsführung und der Eigenschaften der resultierenden Copolymerisate (A), insbesondere der Acrylatcopolymerisate (A), ist Diphenylethylen von ganz besonderem Vorteil und wird deshalb erfindungsgemäß ganz besonders bevorzugt verwendet.

Die erfindungsgemäß zu verwendenden Monomere (a) und (b) werden in Gegenwart mindestens eines radikalischen Initiators miteinander zu dem Copolymerisat (A) umgesetzt. Als Beispiele für einsetzbare Initiatoren werden genannt: Dialkylperoxide, wie Di-tert.-Butylperoxid oder Dicumylperoxid; Hydroperoxide, wie Cumolhydroperoxid oder tert.- Butylhydroperoxid; Perester, wie tert.-Butylperbenzoat, tert.-Butylperpivalat, tert.-Butylper-3,5,5-trimethyl- hexanoat oder tert.-Butylper-2-ethylhexanoat; Kalium-, Natrium- oder Ammoniumsperoxodisulfat; Azodinitrile wie Azobisisobutyronitril; C-C-spaltende Initiatoren wie Benzpinakolsilylether; oder eine Kombination eines nicht oxidierenden Initiators mit Wasserstoffperoxid.

Vorzugsweise werden vergleichsweise große Mengen an radikalischem Initiator zugegeben, wobei der Anteil des Initiators am Reaktionsgemisch, jeweils bezogen auf die Gesamtmenge der Monomeren (a) und des Initiators, besonders bevorzugt 0,5 bis 50 Gew.-%, ganz besonders bevorzugt 1 bis 20 Gew.-% und insbesondere 2 bis 15 Gew.-% beträgt.

Vorzugsweise beträgt das Gewichtsverhältnis von Initiator zu den Monomeren (b) 4 : 1 bis 1 : 4, besonders bevorzugt 3 : 1 bis 1 : 3 und insbesondere 2 : 1 bis 1 : 2. Weitere Vorteile resultieren wenn der Initiator innerhalb der angegebenen Grenzen im Überschuß eingesetzt wird.

Vorzugsweise wird die radikalische Copolymerisation in den eingangs genannten Vorrichtungen, insbesondere Rührkesseln oder Taylorreaktoren, durchgeführt, wobei die Taylorreaktoren so ausgelegt werden, daß auf der gesamten Reaktorlänge die Bedingungen der Taylorströmung erfüllt sind, selbst wenn sich die kinematische Viskosität des Reaktionsmediums aufgrund der Copolymerisation stark ändert, insbesondere ansteigt.

Erfindungsgemäß wird die Copolymerisation in einem wäßrigen Medium durchgeführt.

Das wäßrige Medium enthält im wesentlichen Wasser. Hierbei kann das wäßrige Medium in untergeordneten Mengen die nachstehend im Detail beschriebenen Vernetzungsmittel (C), Reaktivverdünner (G), Lackadditive (H) und/oder organischen Lösemittel (I) und/oder sonstige gelöste feste, flüssige oder gasförmige organische und/oder anorganische, nieder- und/oder hochmolekulare Stoffe, insbesondere oberflächenaktive Substanzen, enthalten, sofern diese nicht die Copolymerisation in negativer Weise beeinflussen oder gar hemmen. Im Rahmen der vorliegenden Erfindung ist unter dem Begriff "untergeordnete Menge" eine Menge zu verstehen, welche den wäßrigen Charakter des wäßrigen Mediums nicht aufhebt.

Bei dem wäßrigen Medium kann es sich aber auch um reines Wasser handeln.

Vorzugsweise wird die Copolymerisation in der Gegenwart mindestens einer Base durchgeführt. Besonders bevorzugt sind niedermolekulare Basen wie Natronlauge, Kalilauge, Ammoniak, Diethanolamin, Triethanolamin, Mono-, Di- und Triethylamin, und/oder Dimethylethanolamin, insbesondere Ammoniak und/oder Diund/oder Triethanolamin.

Die Copolymerisation wird vorteilhafterweise bei Temperaturen oberhalb der Raumtemperatur und unterhalb der niedrigsten Zersetzungstemperatur der jeweils verwendeten Monomeren durchgeführt, wobei bevorzugt ein Temperaturbereich von 10 bis 150°C, ganz besonders bevorzugt 70 bis 120°C und insbesondere 80 bis 110 °C gewählt wird.

Bei Verwendung besonders leicht flüchtiger Monomeren (a) und/oder (b) kann die Copolymerisation auch unter Druck, vorzugsweise unter 1,5 bis 3.000 bar, besonders bevorzugt 5 bis 1.500 und insbesondere 10 bis 1.000 bar durchgeführt werden.

Hinsichtlich der Molekulargewichtsverteilung ist der Bestandteil (A) keinerlei Beschränkungen unterworfen. Vorteilhafterweise wird aber die Copolymerisation so geführt, daß eine Molekulargewichtsverteilung Mw/Mn gemessen mit Gelpermeationschromatographie unter Verwendung von Polystyrol als Standard von ≤ 4, besonders bevorzugt ≤ 2 und insbesondere ≤ 1,5 sowie in einzelnen Fällen auch ≤ 1,3 resultiert. Die Molekulargewichte der Bestandteile (A) sind durch die Wahl des Verhältnisses von Monomer (a) zu Monomer (b) zu radikalischem Initiator in weiten Grenzen steuerbar. Dabei bestimmt insbesondere der Gehalt an Monomer (b) das Molekulargewicht, und zwar derart, daß je größer der Anteil an Monomer (b) ist, desto geringer ist das erhaltene Molekulargewicht.

Der durch die Copolymerisation resultierende Bestandteil (A) fällt als Gemisch mit dem wäßrigen Medium in der Regel in der Form einer Dispersion an. Er kann in dieser Form direkt weiterverarbeitet werden oder aber als Makroinitiator für die weitere Umsetzung mit mindestens einem weiteren Monomeren (a) in einer zweiten Stufe (ii) verwendet werden. Der in der ersten Stufe (i) resultierende Bestandteil (A) kann indes auch als Feststoff isoliert und dann weiter umgesetzt werden.

Die weitere Umsetzung gemäß der Stufe (ii) wird vorzugsweise unter den üblichen Bedingungen für eine radikalische Polymerisation durchgeführt, wobei geeignete Lösemittel (H) und/oder Reaktivverdünner (F) anwesend sein können. Dabei können die Stufen (i) und (ii) im Rahmen des erfindungsgemäßen Verfahrens sowohl räumlich als auch zeitlich getrennt voneinander durchgeführt werden. Darüber hinaus können aber die Stufen (i) und (ii) auch in einem Reaktor nacheinander durchgeführt werden. Hierzu wird zunächst das Monomer (b) mit mindestens einem Monomeren (a) vollständig oder teilweise in Abhängigkeit von der gewünschten Anwendung und der gewünschten Eigenschaften umgesetzt, wonach mindestens ein weiteres Monomer (a) hinzugegeben und radikalisch polymerisiert wird. In einer weiteren Ausführungsform werden von Anfang an mindestens zwei Monomere (a) eingesetzt, wobei das Monomer (b) zunächst mit einem der mindestens zwei Monomeren (a) reagiert und anschließend das resultierende Umsetzungsprodukt (A) oberhalb eines bestimmten Molekulargewichts auch mit dem weiteren Monomeren (a) reagiert.

Je nach Reaktionsführung ist es dabei erfindungsgemäß möglich, an den Endgruppen funktionalisierte Polymere, Block- oder Multiblock- sowie Gradienten(co)polymere, sternförmige Polymere, Pfropfcopolymere und verzweigte (Co)Polymere als Bestandteile (A) herzustellen.

Das Copolymerisat (A) kann mindestens eine, vorzugsweise mindestens zwei, funktionelle Gruppen (afg) enthalten, welche mit komplementären funktionellen Gruppen (cfg) der nachstehend beschriebenen, gegebenenfalls verwendeten Vernetzungsmittel (B) thermische Vernetzungsreaktionen eingehen können. Die funktionellen Gruppen (afg) können dabei über die Monomeren (a) in den Bestandteil (A) eingebracht oder nach dessen Synthese durch polymeranaloge Reaktionen eingeführt werden.

Beispiele geeigneter erfindungsgemäß zu verwendender komplementärer reaktiver funktioneller Gruppen (afg) und (cfg), welche Vernetzungsreaktionen eingehen, sind in der folgenden Übersicht zusammengestellt. In der Übersicht steht die Variable R⁵ für substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste; die Variablen R⁶ und R⁷ stehen für gleiche oder verschiedene Alkyl-, Cycloalkyl-, Alkylcycloalkyl- oder Cycloalkylalkylreste oder sind miteinander zu einem aliphatischen oder heteroaliphatischen Ring verknüpft. Beispiele geeigneter Reste dieser Art sind die vorstehend bei den Resten R¹, R², R³ und R⁴ aufgeführten.

| **Übersicht: Beispiele komplementärer funktioneller Gruppen (afg) und (cfg) im** | |
|---|---|
| **Bestandteil (A) und Vernetzungsmittel (C)** oder **Vernetzungsmittel (C) und Bestandteil (A)** | |
| - SH | -C(O)-OH |
| -NH₂ | -C(O)-O-C(O)- |
| -OH | -NCO |
| -O-(CO)-NH-(CO)-NH₂ | -NH-C(O)-OR⁵ |
| -O-(CO)-NH₂ | -CH₂-OH |
| | -CH₂-O-CH₃ |
| | -NH-C(O)-CH(-C(O)OR⁵)₂ |
| | -NH-C(O)-CH(-C(O)OR⁵)(-C(O)-R⁵) |
| | -NH-C(O)-NR⁶R⁷ |
| | = Si(OR⁵)₂ |
| | O |
| | -CH-CH₂ |
| -C(O)-OH | O |
| | -CH-CH₂ |
| -O-C(O)-CR⁵=CH₂ | -OH |
| -O-CR=CH₂ | -NH₂ |
| | -C(O)-CH₂-C(O)-R⁵ |
| | -CH=CH₂ |

Die Auswahl der jeweiligen komplementären Gruppen (afg) und (cfg) richtet sich zum einen danach, daß sie bei der Lagerung keine unerwünschten Reaktionen eingehen und/oder die gegebenenfalls erfolgende Härtung mit aktinischer Strahlung nicht stören oder inhibieren dürfen, und zum anderen danach, in welchem Temperaturbereich die thermische Härtung erfolgen soll.

Hierbei ist es, insbesondere im Hinblick auf thermisch sensible Substrate wie Kunststoffe, erfindungsgemäß von Vorteil, einen Temperaturbereich zu wählen, welcher 100 °C, insbesondere 80 °C nicht überschreitet. Im Hinblick auf diese Rahmenbedingungen haben sich Hydroxylgruppen und Isocyanatgruppen oder Carboxylgruppen und Epoxygruppen als komplementäre funktionelle Gruppen als vorteilhaft erwiesen, weswegen sie in den erfindungsgemäßen Beschichtungsstoffen, welche als Zwei- oder Mehrkomponentensysteme vorliegen, erfindungsgemäß bevorzugt angewandt werden. Besondere Vorteile resultieren, wenn die Hydroxylgruppen als funktionelle Gruppen (afg) und die Isocyanatgruppen als funktionelle Gruppen (cfg) verwendet werden.

Können höhere Vernetzungstemperaturen, beispielsweise von 100 °C bis 160 °C, angewandt werden, was erfindungsgemäß bevorzugt ist, kommen als Beschichtungsstoffe auch Einkomponentensysteme in Betracht, worin die funktionellen Gruppen (afg) vorzugsweise Thio-, Amino-, Hydroxyl-, Carbamat-, Allophanat-, Carboxy-, und/oder (Meth)acrylatgruppen, insbesondere aber Hydroxylgruppen und die funktionellen Gruppen (cfg) vorzugsweise Anhydrid-, Carboxy-, Epoxy-, blockierte Isocyanat-, Urethan-, Methylol-, Methylolether-, Siloxan-, Amino-, Hydroxy- und/oder beta-Hydroxyalkylamidgruppen sind.

Das Copolymerisat (A) bzw. der hiermit hergestellte Beschichtungsstoff kann aber auch ohne ein Vernetzungsmittel (C) verfilmen und eine vorzügliche Füllerschicht oder Steinschlagschutzgrundierungen bilden. In diesem Falle ist das Copolymerisat (A) physikalisch härtend. Im Rahmen der vorliegenden Erfindung werden die physikalische Härtung und die Härtung über die vorstehend beschriebenen komplementären Gruppen (afg) und (cfg) unter dem Oberbegriff "thermische Härtung" zusammenfaßt.

Der Anteil des erfindungsgemäß zu verwendenden Copolymerisats (A) an dem Beschichtungsstoff kann sehr breit variieren. Vorteilhafterweise liegt der Anteil im Hinblick auf das erfindungsgemäß einzustellende Pigment/Bindemittel-Verhältnis (B) : (A) von 4 : 1 bis 1 : 4, bevorzugt 3 : 1 bis 1 : 3 und insbesondere 2 : 1 bis 1 : 1 bei 20 bis 80 Gew.-%, bevorzugt 25 bis 75 Gew.-% und insbesondere 33,34 bis 66,66 Gew.-%, jeweils bezogen auf die Gesamtmenge an (B) und (A). Im Rahmen der vorliegenden Erfindung umfaßt der Begriff "Pigment/Bindemittel-Verhältnis" auch das Verhältnis von Füllstoff zu Bindemittel oder von Füllstoff und Pigment zu Bindemittel.

Der erfindungsgemäße Beschichtungsstoffkann des weiteren mindestens ein übliches und bekanntes Bindemittel (A) mit mindestens einer funktionellen Gruppe (afg) enthalten. Beispiele geeigneter üblicher und bekannter Bindemittel (A) sind lineare und/oder verzweigte und/oder blockartig, kammartig und/oder statistisch aufgebaute Poly(meth)acrylate oder Acrylatcopolymerisate, Polyester, Alkyde, Aminoplastharze, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe, die die besagten funktionellen Gruppen (afg) enthalten. Sofern verwendet, sind sie in dem erfindungsgemäßen Beschichtungsstoff vorzugsweise in einer Menge von 1 bis 60 Gewichtsteilen, besonders bevorzugt 2 bis 50 Gewichtsteilen und insbesondere 3 bis 45 Gewichtsteilen pro 100 Gewichtsteilen an (A) und (B) enthalten.

Der erfindungsgemäße Beschichtungsstoff enthält des weiteren mindestens ein Pigment und/oder Füllstoff (B).

Die Pigmente (B) bestehen aus anorganischen oder organischen Verbindungen und sind effekt- und/oder farbgebend, insbesondere aber farbgebend. Der erfindungsgemäße Beschichtungsstoff gewährleistet daher aufgrund dieser Vielzahl geeigneter Pigmente (B) eine universelle Einsatzbreite sowie eine sehr gute Anpassung der Füllerschichten und Steinschlagschutzgrundierungen an den Farbton der jeweils verwendeten Unidecklackierung DL oder Basislackierung BL.

Beispiele für geeignete anorganische farbgebende Pigmente (B) sind Titandioxid, Eisenoxide, Sicotransgelb und Ruß. Beispiele für geeignete organische farbgebende Pigmente (B) sind Indanthrenblau, Cromophthalrot, Irgazinorange und Heliogengrün.

Desweiteren enthält der Beschichtungsstoff zusätzlich zu den Pigmenten oder an ihrer Stelle organische und anorganische Füllstoffe (B). Beispiele für geeignete Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Holzmehl. Ergänzend wird auf Römpp Lexikon Lacke und Druckfarben, Georg Thieme Verlag, 1998, Seiten 250 ff., »Füllstoffe«, verwiesen.

Die Pigmente und/oder Füllstoffe (B) können auch über Pigmentpasten in die Beschichtungsstoffe eingearbeitet werden, wobei als Reibharze insbesondere die vorstehend beschriebenen Copolymerisate (A) in Betracht kommen.

Der Anteil der erfindungsgemäß zu verwendenden Pigmente und/oder Füllstoffe (B) an dem Beschichtungsstoff kann sehr breit variieren. Vorteilhafterweise liegt der Anteil im Hinblick auf das erfindungsgemäß einzustellende Pigment/Bindemittel-Verhältnis (B) : (A) von von 4 : 1 bis 1 : 4, bevorzugt 3 : 1 bis 1 : 3 und insbesondere 2 : 1 bis 1 : 1 bei 20 bis 80 Gew.-%, bevorzugt 25 bis 75 Gew.-% und insbesondere 33,34 bis 66,66 Gew.-%, jeweils bezogen auf die Gesamtmenge an (B) und (A).

Der Beschichtungsstoff kann des weiteren mindestens ein Vernetzungsmittel (C), welches mindestens zwei, insbesondere drei, der vorstehend im Detail beschriebenen komplementären funktionellen Gruppen (cfg) enthält, enthalten.

Handelt es sich bei dem Beschichtungsstoff um ein Zwei- oder Mehrkomponentensystem, werden Polyisocyanate und/oder Polyepoxide, insbesondere aber Polyisocyanate als Vernetzungsmittel (C) verwendet.

Beispiele geeigneter Polyisocyanate (C) sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5.000 und insbesondere 100 bis 2.000 mPas (bei 23°C) eingesetzt. Gegebenenfalls können den Polyisocyanaten noch geringe Mengen organisches Lösemittel (H), bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Amylmethylketon oder Butylacetat. Außerdem können die Polyisocyanate (C) in üblicher und bekannter Weise hydrophil oder hydrophob modifiziert sein.

Beispiele für geeignete Polyisocyanate (C) sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben.

Weitere Beispiele geeigneter Polyisocyanate (C) sind Isocyanurat-, Biuret-, Allophanat-, Iminooxadiazindion-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendüsocyanat, dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan (BIC), Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethylheptan oder 1-Isocyanato-2-(3-isocyanatopropyl)cyclohexan oder Mischungen aus diesen Polyisocyanaten eingesetzt.

Beispiele für geeignete Polyepoxide (C) sind alle bekannten aliphatischen und/oder cycloaliphatischen und/oder aromatischen Polyepoxide, beispielsweise auf Basis Bisphenol-A oder Bisphenol-F. Als Polyepoxide geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-41 (Pentaerythritpolyglycidylether), Denacol EX-321 (Trimethylolpropanpolyglycidylether), Denacol EX-512 (Polyglycerolpolyglycidylether) und Denacol EX-521 (Polyglycerolpolyglycidylether).

Im Falle der Einkomponentensysteme werden Vernetzungsmittel (C) verwendet, welche bei höheren Temperaturen mit den funktionellen Gruppen (afg) der Bindemittel (A) reagieren, um ein dreidimensionales Netzwerk aufzubauen. Selbstverständlich können solche Vernetzungsmittel (C) in untergeordneten Mengen in den Mehrkomponentensystemen mit verwendet werden. Im Rahmen der vorliegenden Erfindung bedeutet "untergeordnete Menge" einen Anteil, welcher die hauptsächliche Vernetzungsreaktion nicht stört oder gar ganz verhindert.

Beispiele geeigneter Vernetzungsmittel (C) dieser Art sind blockierte Polyisocyanate. Beispiele geeigneter Polyisocyanate zur Herstellung der blockierten Polyisocyanate sind die vorstehend beschriebenen.

Beispiele für geeignete Blockierungsmittel sind die aus der US-Patentschrift US-A-4,444,954 bekannten Blockierungsmittel wie
- i): Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;
- ü): Lactame, wie ε-Caprolactam, δ-Valerolactam, γ-Butyrolactam oder β-Propiolactam;
- iii): aktive methylenische Verbindungen, wie Diethylmalonat, Dimethylmalonat, Acetessigsäureethyl- oder -methylester oder Acetylaceton;
- iv): Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;
- v): Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;
- vi): Säureamide wie Acetoanilid, Acetoanisidinamid, Acrylamid, Methacrylamid, Essigsäureamid, Stearinsäureamid oder Benzamid;
- vii): Imide wie Succinimid, Phthalimid oder Maleimid;
- viii): Amine wie Diphenylamin, Phenylnaphthylamin, Xylidin, N-Phenylxylidin, Carbazol, Anilin, Naphthylamin, Butylamin, Dibutylamin oder Butylphenylamin;
- ix): Imidazole wie Imidazol oder 2-Ethylimidazol;
- x): Harnstoffe wie Harnstoff, Thioharnstoff, Ethylenharnstoff, Ethylen-thioharnstoff oder 1,3-Diphenylharnstoff;
- xi): Carbamate wie N-Phenylcarbamidsäurephenylester oder 2-Oxazolidon;
- xii): Imine wie Ethylenimin;
- xiii): Oxime wie Acetonoxim, Formaldoxim, Acetaldoxim, Acetoxim, Methylethylketoxim, Diisobutylketoxim, Diacetytmonoxim, Benzophenonoxim oder Chlorohexanonoxime;
- xiv): Salze der schwefeligen Säure wie Natriumbisulfit oder Kaliumbisulfit;
- xv): Hydroxamsäureester wie Benzylinethacrylohydroxamat (BMH) oder Allylmethacrylohydroxamat; oder
- xvi): substituierte Pyrazole, Imidazole oder Triazole; sowie

Gemische dieser Blockierungsmittel, insbesondere Dimethylpyrazol und Triazole, Malonester und Acetessigsäureester oder Dimethylpyrazol und Succinimid.

Als Vernetzungsmittel (C) können auch Tris(alkoxycarbonylamino)triazine (TACT) der allgemeinen Formel 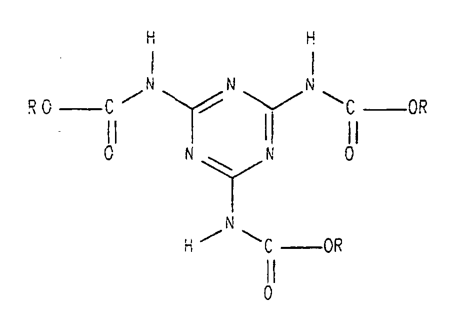 eingesetzt werden.

Beispiele geeigneter Tris(alkoxycarbonylamino)triazine (C) werden in den Patentschriften US-A-4,939,213, US-A-5,084,541 oder EP-A-0 624 577 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Insbesondere sind Aminoplastharze, beispielsweise Melaminharze, Guanaminharze oder Harnstoffharze, als Vernetzungsmittel (C) verwendbar. Hierbei kann jedes für transparente Decklacke oder Klarlacke geeignete Aminoplastharz oder eine Mischung aus solchen Aminoplastharzen verwendet werden. Ergänzend wird auf Römpp Lexikon Lacke und Druckfarben, Georg Thieme Verlag, 1998, Seite 29, »Aminoharze«, und das Lehrbuch "Lackadditive" von Johan Bieleman, Wiley-VCH, Weinheim, New York, 1998, Seiten 242 ff., oder auf das Buch "Paints, Coatings and Solvents", second completely revised edition, Edit. D. Stoye und W. Freitag, Wiley-VCH, Weinheim, New York, 1998, Seiten 80 ff., verwiesen. Des weiteren kommen die üblichen und bekannten Aminoplastharze in Betracht, deren Methylol- und/oder Methoxymethylgruppen z. T. mittels Carbamat- oder Allophanatgruppen defunktionalisiert sind. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Weitere Beispiele geeigneter Vernetzungsmittel (C) sind beta-Hydroxyalkylamide wie N,N,N',N-Tetrakis(2-hydroxyethyl)adipamid oder N,N,N',N'-Tetrakis(2-hydroxypropyl)-adipamid.

Weitere Beispiele geeigneter Vernetzungsmittel (C) sind Siloxane, insbesondere Siloxane mit mindestens einer Trialkoxy- oder Dialkoxysilangruppe.

Weitere Beispiele geeigneter Vernetzungsmittel (C) sind Polyanhydride, insbesondere Polysuccinsäureanhydrid.

Weitere Beispiele geeigneter Vernetzungsmittel (C) sind Verbindungen mit im Mittel mindestens zwei zur Umesterung befähigten Gruppen, beispielsweise Umsetzungsprodukte von Malonsäurediestern und Polyisocyanaten oder Umsetzungsprodukte von Monoisocyanaten mit Estern und Teilestern der Malonsäure mit mehrwertigen Alkoholen, wie sie in der europäischen Patentschrift EP-A-0 596 460 beschrieben werden.

Die Menge der Vernetzungsmittel (C) in dem Beschichtungsstoff kann - sofern verwendet - breit variieren und richtet sich insbesondere zum einen nach der Funktionalität der Vernetzungsmittel (C) und zum anderen nach der Anzahl der im Bindemittel (A) vorhandenen vernetzenden funktionellen Gruppen (afg) sowie nach der Vernetzungsdichte, die man erzielen will. Der Fachmann kann daher die Menge der Vernetzungsmittel (C) aufgrund seines allgemeinen Fachwissens, gegebenenfalls unter Zuhilfenahme einfacher orientierender Versuche ermitteln. Vorteilhafterweise ist das Vernetzungsmittel (C) in dem erfindungsgemäßen Beschichtungsstoff in einer Menge von 1 bis 60 Gewichtsteilen, besonders bevorzugt 2 bis 50 Gewichtsteilen und insbesondere 3 bis 45 Gewichtsteilen pro 100 Gewichtsteilen an (A) und (B) enthalten. Hierbei empfiehlt es sich des weiteren, die Mengen an Vernetzungsmittel (C) und Bindemittel (A) so zu wählen, daß in dem Beschichtungsstoff das Verhältnis von funktionellen Gruppen (cfg) im Vernetzungsmittel (C) und funktionellen Gruppen (afg) im Bindemittel (A) zwischen 2 : 1 bis 1 : 2, vorzugsweise 1,5 : 1 bis 1 : 1,5, besonders bevorzugt 1,2 : 1 bis 1 : 1,2 und insbesondere 1,1 : 1 bis 1 : 1,1 liegt.

Wenn der erfmdungsgemäße Beschichtungsstoff nicht nur thermisch sondern auch mit aktinischer Strahlung, insbesondere UV-Strahlung und/oder Elektronenstrahlung, härtbar sein soll (Dual Cure), enthält er mindestens einen Bestandteil (D), welcher mit aktinischer Strahlung härtbar ist. Soll der erfindungsgemäße Basislack jedoch überwiegend (Dual Cure) oder ausschließlich mit aktinischer Strahlung härtbar sein, enthält er obligatorisch einen Bestandteil (D).

Als Bestandteile (D) kommen grundsätzlich alle mit aktinischer Strahlung, insbesondere UV-Strahlung und/oder Elektronenstrahlung, härtbaren oligomeren und polymeren Verbindungen in Betracht, wie sie üblicherweise auf dem Gebiet der UV-härtbaren oder mit Elektronenstrahlung härtbaren Beschichtungsstoffe verwendet werden.

Vorteilhafterweise werden strahlenhärtbare Bindemittel als Bestandteile (D) verwendet. Beispiele geeigneter strahlenhärtbarer Bindemittel (D) sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate, Isocyanatoacrylate und die entsprechenden Methacrylate. Bevorzugt werden Bindemittel (D) eingesetzt, die frei von aromatischen Struktureinheiten sind. Bevorzugt werden daher Urethan(meth)acrylate und/oder Polyester(meth)acrylate, besonders bevorzugt aliphatische Urethanacrylate, eingesetzt.

Sofern die Bestandteile (D) mit verwendet werden, sind sie in dem Beschichtungsstoff in einer Menge von vorzugsweise 1 bis 60, bevorzugt 1,5 bis 50, besonders bevorzugt 2 bis 40 und insbesondere 2,5 bis 30 Gewichtsteilen pro 100 Gewichtsteilen an (A) und (B) enthalten.

Der erfindungsgemäße Beschichtungsstoff kann desweiteren mindestens einen Photoinitiator (E) enthalten. Wenn der Beschichtungsstoff bzw. die hieraus hergestellte Schichten im Rahmen des erfindungsgemäßen Verfahrens zusätzlich mit UV-Strahlung vernetzt werden sollen, ist die Verwendung eines Photoinitiators (E) im allgemeinen notwendig. Sofern er mit verwendet wird, ist er in dem erfindungsgemäßen Beschichtungsstoff vorzugsweise in Anteilen von 0,01 bis 10, bevorzugt 0,1 bis 8 und insbesondere 0,5 bis 6 Gewichtsteilen pro 100 Gewichtsteilen an (A) und (B) enthalten.

Beispiele geeigneter Photoinitiatoren (E) sind solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon »Lacke und Druckfarben« Georg Thieme Verlag Stuttgart, 1998, Seiten 444 bis 446, verwiesen), insbesondere Benzophenone, Benzoine oder Benzoinether oder Phosphinoxide. Es können auch beispielsweise die im Handel unter den Namen Irgacure® 184, Irgacure® 1800 und Irgacure® 500 der Firma Ciba Geigy, Grenocure ® MBF der Firma Rahn und Lucirin® TPO der Firma BASF AG erhältlichen Produkte eingesetzt werden.

Neben den Photoinitiatoren (E) können übliche Sensibilisatoren (E) wie Anthracen in wirksamen Mengen verwendet werden.

Des weiteren kann der Beschichtungsstoff mindestens einen Initiator der thermischen Vernetzung (F) enthalten. Diese bilden ab 80 bis 120°C Radikale, welche die Vernetzungsreaktion starten. Beispiele für thermolabile radikalische Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether. C-C-spaltende Initiatoren sind besonders bevorzugt, da bei ihrer thermischen Spaltung keine gasförmigen Zersetzungprodukte gebildet werden, die zu Störungen in der Lackschicht führen könnten. Sofern sie mit verwendet werden, liegen ihre Mengen im allgemeinen zwischen 0,01 bis 10, vorzugsweise 0,05 bis 8 und insbesondere 0,1 bis 5 Gewichtsteilen pro 100 Gewichtsteilen an (A) und (B).

Darüber hinaus kann der Beschichtungsstoff mindestens einen mit aktinischer Strahlung und/oder thermisch härtbaren Reaktivverdünner (G) enthalten.

Beispiele geeigneter thermisch vernetzbarer Reaktiverdünner (G) sind verzweigte, cyclische und/oder acyclische C₉-C₁₆-Alkane, die mit mindestens zwei Hydroxylgruppen funktionalisiert sind, vorzugsweise Dialkyloctandiole, insbesondere die stellungsisomeren Diethyloctandiole.

Weitere Beispiele geeigneter thermisch vernetzbarer Reaktiverdünner (G) sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7-Oxanorbonen; Beispiele geeigneter acyclischer Monoolefine sind in Kohlenwasserstoffgemischen enthalten, die in der Erdölverarbeitung durch Cracken erhalten werden (C₅-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1.000 und ein massennüttleres Molekulargewicht Mwvon 600 bis 1.100 auf.

Weitere Beispiele geeigneter thermisch vernetzbarer Reaktiverdünner (G) sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bis-hydroxymethyl-butandiol-(1,4) (Homopentaerythrit). Die Herstellung dieser Reaktivverdünner kann nach den üblichen und bekannten Methoden der Herstellung hyperverzweigter und dendrimerer Verbindungen erfolgen. Geeignete Synthesemethoden werden beispielsweise in den Patentschriften WO 93/17060 oder WO 96/12754 oder in dem Buch von G. R. Newkome, C. N. Moorefield und F. Vögtle, "Dendritic Molecules, Concepts, Syntheses, Perspectives", VCH, Weinheim, New-York, 1996, beschrieben.

Weitere Beispiele geeigneter Reaktivverdünner (G) sind Polycarbonatdiole, Polyesterpolyole, Poly(meth)acrylatdiole oder hydroxylgruppenhaltige Polyadditionsprodukte.

Beispiele geeigneter reaktiver Lösemittel, welche als Reaktiverdünner (G) verwendet werden können, sind Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethyl-ether, Diethylenglykoldiethylether, Diethylenglykolmonobutylether, Trimethylolpropan, 2-Hydroxypropionsäureethylester oder 3-Methyl-3-methoxybutanol sowie Derivate auf Basis von Propylen glykol, z.B. Isopropoxypropanol, genannt.

Als Reaktivverdünner (G), welche mit aktinischer Strahlung vernetzt werden können, werden beispielsweise Polysiloxanmakromonomere, (Meth)Acrylsäure und deren sonstigen Ester, Maleinsäure und deren Ester bzw. Halbester, Vinylacetat, Vinylether, Vinylharnstoffe u.ä. eingesetzt. Als Beispiele seien Alkylenglykoldi(meth)acrylat, Polyethylenglykoldi(meth)acrylat, 1,3-Butandioldi(meth)acrylat, Vinyl(meth)acrylat, Allyl(meth)acrylat, Glycerin-tri(meth)acrylat, Trimethylolpropantri(meth)acrylat, Trimethylolpropandi(meth)acrylat, Tripropylenglykoldiacrylat, Styrol, Vinyltoluol, Divinylbenzol, Pentaerythrittri(meth)acrylat, Pentaerythrittetra(meth)acrylat, Dipropylenglykoldi(meth)acrylat, Hexandioldi(meth)acrylat, Ethoxyethoxyethylacrylat, N-Vinylpyrrolidon, Phenoxyethylacrylat, Dimethylaminoethylacrylat, Hydroxyethyl-(meth)acrylat, Butoxyethylacrylat, Isobornyl(meth)acrylat, Dimethylacrylamid und Dicyclopentylacrylat, sowie die in der EP-A-0 250 631 beschriebenen, langkettigen linearen Diacrylate mit einem Molekulargewicht von 400 bis 4.000, bevorzugt von 600 bis 2.500 genannt Beispielsweise können die Acrylatgruppen auch durch eine Polyoxybutylenstruktur getrennt sein. Einsetzbar sind außerdem 1,12-Dodecyldiacrylat und das Umsetzungsprodukt von 2 Molen Acrylsäure mit einem Mol eines Dimerfettalkohols, der im allgemeinen 36 C-Atome aufweist. Geeignet sind auch Gemische der genannten Monomeren.

Bevorzugt werden als Reaktivverdünner (G) Mono- und/oder Diacrylate, wie z.B. Isobornylacrylat, Hexandioldiacrylat, Tripropylenglykoldiacrylat, Laromer® 8887 der Firma BASF AG und Actilane® 423 der Firma Akcros Chemicals Ltd., GB, eingesetzt. Besonders bevorzugt werden Isobornylacrylat, Hexandioldiacrylat und Tripropylenglykoldiacrylat eingesetzt.

Sofern sie mit verwendet werden, werden die Reaktivverdünner (G) in einer Menge von vorzugsweise 1 bis 70, besonders bevorzugt 2 bis 65 und insbesondere 3 bis 50 Gewichtsteilen pro 100 Gewichtsteilen an (A) und (B) angewandt.

Der Beschichtungsstoff kann lackübliche Additive (H) in wirksamen Mengen enthalten. Vorteilhafterweise sind die Additive (H) unter den Verarbeitungs- und Applikationsbedingungen des erfindungsgemäßen Beschichtungsstoffs nicht flüchtig.

Beispiele geeigneter Additive (H) sind
- UV-Absorber;
- Radikalfänger;
- Katalysatoren für die Vernetzung wie Dibutylzinndilaurat oder Lithiumdecanoat;
- Slipadditive;
- Polymerisationsinhibitoren;
- Entschäumer;
- Trockenstoffe;
- Hautverhinderungsmittel;
- Neutralisationsmittel wie Ammoniak oder Dimethylethanolamin;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- rheologiesteuernde Additive wie die aus den Patentschriften WO 94/22968, EP-A-0 276 501, EP-A-0 249 201 oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;
- Flammschutzmittel und/oder
- Biozide.

Weitere Beispiele geeigneter Lackadditive (H) werden in dem Lehrbuch »Lackadditive« von Johan Bieleman, Wiley-VCH, Weinheim, New York, 1998, beschrieben.

Vorzugsweise enthält der Beschichtungsstoff diese Additive (H) in Mengen bis zu 40, besonders bevorzugt bis zu 30 und insbesondere bis zu 20 Gewichtsteilen pro 100 Gewichtsteilen an (A) und (B).

Nicht zuletzt können die erfindungsgemäßen Beschichtungsstoffe, insbesondere im Falle nichtwäßriger Beschichtungsstoffe, 1 bis 300, vorzugsweise 2 bis 200 und insbesondere 3 bis 100 Gewichtsteile pro 100 Gewichtsteilen (A) und (B) wassermischbare und nicht wassermischbare organische Lösungsmittel (I) enthalten, wie z.B. aliphatische, aromatische und/oder cycloaliphatische Kohlenwasserstoffe wie Toluol oder Methylcylohexan oder Decalin, Alkylester der Essigsäure oder Propionsäure, Alkanole wie Ethanol, Ketone wie Methylisobutylketon, Glykolether Glykoletherester, und/oder Ether wie Tetrahydrofuran. Im Rahmen der vorliegenden Erfindung kann auch Kohlendioxid als Lösemittel (I) verwendet werden.

Der erfmdungsgemäße Beschichtungsstoff kann in unterschiedlichen Formen vorliegen.

So kann er bei entsprechender Wahl seiner vorstehend beschriebenen Bestandteile (A) und (B) sowie gegebenenfalls mindestens einem seiner Bestandteile (A; übliche und bekannte Bindemittel), (C), (D), (E), (F), (G) und/oder (H) als flüssiger Beschichtungsstoff vorliegen, welcher im wesentlichen frei von organischen Lösemitteln und/oder Wasser ist (100%-System).

Indes kann es sich bei dem Beschichtungsstoff um eine Lösung oder Dispersion der vorstehend beschriebenen Bestandteile in organischen Lösemitteln (I) und/oder Wasser handeln. Es ist ein weiterer Vorteil des erfindungsgemäßen Beschichtungsstoffs, daß hierbei Feststoffgehalte bis zu mehr als 80 Gew.-%, bezogen auf den Beschichtungsstoff, eingestellt werden können.

Des weiteren kann der erfindungsgemäße Beschichtungsstoff bei entsprechender Wahl seiner vorstehend beschriebenen Bestandteile ein Pulverlack sein. Zu diesem Zweck kann der Bestandteil (C) mikroverkapselt sein, wenn es sich um ein Polyisocyanat handelt. Dieser Pulverlack kann dann gegebenenfalls in Wasser dispergiert werden, wodurch ein Pulverslurry-Lack resultiert.

Der Beschichtungsstoff kann ein Zwei- oder Mehrkomponentensystem sein, bei dem zumindest der Bestandteil (C) getrennt von den übrigen Bestandteilen gelagert und erst kurz vor der Verwendung zu diesen hinzugegeben wird. In diesem Falle kann der erfindungsgemäße Beschichtungsstoff auch wäßrig sein, wobei der Bestandteil (C) vorzugsweise in einer ein Lösemittel (I) enthaltenden Komponente vorliegt.

Des weiteren kann der erfindungsgemäße Beschichtungsstoff Bestandteil eines sogenannten Mischsystems oder Mödulsystems sein, wie sie beispielsweise in den Patentschriften DE-A-41 10 520, EP-A-0 608 773, EP-A-0 614 951 oder EP-A-0 471 972 beschrieben werden.

Vorzugsweise liegt der erfindungsgemäße Beschichtungsstoff als wäßrige Lösung, Dispersion und/oder Emulsion, insbesondere Dispersion, vor, weil hierbei die Isolierung des erfindungsgemäß zu verwendenden Copolymerisats (A) entfallen kann.

Die Herstellung des Beschichtungsstoffs aus seinen Bestandteilen (A) und (B), sowie gegebenenfalls mindestens einem seiner Bestandteile (A; übliche und bekannte Bindemittel), (C), (D), (E), (F), (G), (H) und/oder (I) weist keine Besonderheiten auf, sondern erfolgt in üblicher und bekannter Weise durch Vermischen der Bestandteile in geeigneten Mischaggregaten wie Rührkessel, Dissolver oder Extruder nach den für die Herstellung der jeweiligen Beschichtungsstoffe geeigneten Verfahren.

Der erfindungsgemäße Beschichtungsstoff dient der Herstellung der erfindungsgemäßen Füllerschicht oder Steinschlagschutzgrundierungen auf grundierten oder ungrundierten Substraten.

Als Substrate kommen im Grunde alle zu lackierenden Oberflächen, die durch eine Härtung der hierauf befindlichen Lackierungen unter Anwendung von Hitze und gegebenenfalls aktinischer Strahlung nicht geschädigt werden, in Betracht, das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gipsund Zementplatten oder Dachziegel, sowie Verbunde dieser Materialien.

Vorzugsweise werden Substrate mit dem erfindungsgemäßen Beschichtungsstoff beschichtet, bei denen es aufgrund ihrer üblichen Verwendung zu einer Schädigung durch Steinschlag kommen kann.

Demnach ist der erfindungsgemäße Beschichtungsstoff im Grunde auch für Anwendungen außerhalb der Automobillackierung geeignet, beispielsweise in der industriellen Lackierung, inklusive Coil Coating und Container Coating. Im Rahmen der industriellen Lackierungen eignet sie sich für die Lackierung praktisch aller Teile für den privaten oder industriellen Gebrauch wie Radiatoren, Haushaltsgeräte, Kleinteile aus Metall, Radkappen oder Felgen. In speziellen Fällen kommt der erfindungsgemäßen Beschichtungsstoff auch für die Lackierung von Möbeln in Betracht.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht.

Mit dem erfindungsgemäßen Beschichtungsstoff können insbesondere auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden. Die zu lackierenden Kunststoffe können selbstverständlich auch Polymerblends, modifizierte Kunststoffe oder faserverstärkte Kunststoffe sein. Es können auch die üblicherweise im Fahrzeugbau, insbesondere Kraftfahrzeugbau, eingesetzten Kunststoffe zum Einsatz kommen. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Die Applikation des erfindungsgemäßen Beschichtungsstoffs weist keine methodischen Besonderheiten auf, sondern kann durch alle üblichen Applikationsmethoden, wie z.B. Spritzen, Rakeln, Streichen, Gießen, Tauchen oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Die Applikation kann bei Temperaturen von max. 70 bis 80°C durchgeführt werden, so daß geeignete Applikationsviskositäten erreicht werden, ohne daß bei der kurzzeitig einwirkenden thermischen Belastung eine Veränderung oder Schädigungen des Beschichtungsstoffs und seines gegebenenfalls wiederaufzubereitenden Overspray eintreten. So kann das Heißspritzen so ausgestaltet sein, daß der Beschichtungsstoff nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Beschichtungsstoff selbst, betrieben wird.

Sofern der Beschichtungsstoff Bestandteile (D) enthält, die mit aktinischer Strahlung vernetztbar sind, wird die Applikation bei Beleuchtung mit sichtbarem Licht einer Wellenlänge von über 550 nm oder unter Lichtausschluß durchgeführt. Hierdurch werden eine stoffliche Änderung oder Schädigung des Beschichtungsstoffs und des Overspray vermieden.

Die vorstehend beschriebenen Applikationsmethoden können im Rahmen des erfindungsgemäßen Verfahrens zur Herstellung aller Schichten DL, BL und KL sowie gegebenenfalls weiterer Lackschichten der erfindungsgemäßen Mehrschichtlackierung ML angewandt werden.

Erfindungsgemäß kann die Füllerlackschicht je nach ihrer stofflichen Zusammensetzung thermisch und/oder mit aktinischer Strahlung ausgehärtet werden.

Die Aushärtung kann nach einer gewissen Ruhezeit erfolgen. Sie kann eine Dauer von 30 s bis 2 h, vorzugsweise 1 min bis 1 h und insbesondere 1 min bis 30 min haben. Die Ruhezeit dient beispielsweise zum Verlauf und zur Entgasung der Lackschichten oder zum Verdunsten von flüchtigen Bestandteilen wie Lösemittel, Wasser oder Kohlendioxid, wenn der Beschichtungsstoff mit überkritischem Kohlendioxid als Lösemittel (I) appliziert worden ist. Die Ruhezeit kann durch die Anwendung erhöhter Temperaturen bis 80 °C unterstützt und/oder verkürzt werden, sofern hierbei keine Schädigungen oder Veränderungen der Lackschichten eintreten, etwa eine vorzeitige vollständige Vernetzung.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Vorteilhafterweise erfolgt die thermische Härtung bei einer Temperatur von 50 bis 100 °C, besonders bevorzugt 80 bis 100 °C und insbesondere 90 bis 100 ° C während einer Zeit von 1 min bis zu 2 h, besonders bevorzugt 2 min bis zu 1 h und insbesondere 3 min bis 30 min. Werden Substrate verwendet, welche thermisch stark belastbar sind, kann die thermische Vernetzung auch bei Temperaturen oberhalb 100 °C durchgeführt werden. Im allgemeinen empfiehlt es sich, hierbei Temperaturen von 160 °C, vorzugsweise 140 °C und insbesondere 130 °C nicht zu überschreiten.

Die thermische Härtung kann bei entsprechender stofflicher Zusammensetzung des Beschichtungsstoffs durch die Härtung mit aktinischer Strahlung ergänzt werden, wobei UV-Strahlung und/oder Elektronenstrahlen verwendet werden können. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zuführen von Kohlendioxid und/oder Stickstoff direkt an die Oberfläche der Lackschicht gewährleistet werden.

Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt. Beispiele geeigneter Strahlenquellen sind Quecksilberhoch- oder -niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken wie Automobilkarosserien können die nicht direkter Strahlung zugänglichen Bereiche (Schattenbereiche) wie Hohlräume, Falzen und anderen konstruktionsbedingte Hinterschneidungen mit Punkt-, Kleinflächenoder Rundumstrahlern verbunden mit einer automatischen Bewegungseinrichtung für das Bestrahlen von Hohlräumen oder Kanten ausgehärtet werden.

Die Anlagen und Bedingungen dieser Härtungsmethoden werden beispielsweise in R. Holmes, U.V. and E.B. Curing Formulations for Printing Inks, Coatings and Paints, SITA Technology, Academic Press, London, United Kindom 1984, beschrieben.

Hierbei kann die Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Werden die thermische Härtung und Härtung mit aktinischer Strahlung zusammen angewandt, können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für jeden Einzelfall besonders gut geeignet ist, aufgrund seines allgemeinen Fachwissens gegebenenfalls unter Zuhilfenahme einfacher Vorversuche ermitteln.

Die Kombination von thermischer Härtung und Härtung mit aktinischer Strahlung bietet auch bei den erfindungsgemäßen Beschichtungsstoffen mit sehr hohem Pigmentgehalt noch Vorteile, die insbesondere darin liegen, daß die Füllerlackschichten in ihren substratnahen Bereichen in der Hauptsache thermisch und in ihren Oberflächenbereichen zusätzlich durch Strahlung gehärtet werden, was zu erfindungsgemäßen Füllerschichten oder Steinschlagschutzgrundierungen FL mit einer besonders hohen Oberflächenqualität führt.

Diese Härtungsmethoden können im Rahmen des erfindungsgemäßen Verfahrens zur Herstellung aller Schichten DL, BL und KL sowie gegebenenfalls weiterer Lackschichten der erfindungsgemäßen Mehrschichtlackierung ML angewandt werden.

Die resultierenden erfindungsgemäßen Füllerschichten oder Steinschlagschutzgrundierungen FL weisen eine Schichtdicke von 10 bis 150, vorzugsweise 15 bis 120, besonders bevorzugt 20 bis 100, ganz besonders bevorzugt 20 bis 50 und insbesondere 25 bis 40 µm auf.

Die erfindungsgemäßen Füllerschichten oder Steinschlagschutzgrundierungen FL sind die wesentlichen Bestandteile der erfindungsgemäßen Mehrschichtlackierung ML.

Die erfindungsgemäßen Mehrschichtlackierungen ML können nach dem erfindungsgemäßen Verfahren in unterschiedlicher Weise hergestellt werden.

In einer ersten bevorzugten Variante umfaßt das erfindungsgemäße Verfahren die folgenden Verfahrensschritte:
- (I): Herstellen einer Füllerlackschicht durch Applikation eines Füllers auf das Substrat,
- (II): Härtung der Füllerlackschicht, wodurch die Füllerschicht FL resultiert,
- (III): Herstellen einer Unidecklackschicht durch Applikation eines Unidecklacks auf die Füllerschicht FL und
- (IV): Härtung der Unidecklackschicht DL, wodurch die Unidecklackierung DL resultiert.

Eine weitere bevorzugte Variante des erfindungsgemäßen Verfahrens umfaßt die Verfahrensschritte:
- (I): Herstellen einer Füllerlackschicht durch Applikation eines Füllers auf das Substrat,
- (II): Härtung der Füllerlackschicht, wodurch die Füllerschicht FL resultiert,
- (III): Herstellen einer Basislackschicht durch Applikation eines Basislacks auf die Füllerschicht FL,
- (IV): Trocknen der Basislackschicht,
- (V): Herstellen einer Klarlackschicht durch Applikation eines Klarlacks auf die Basislackschicht und
- (VI): gemeinsame Härtung der Basislackschicht und der Klarlackschicht, wodurch die Basislackierung BL und die Klarlackierung KL resultieren (Naß-in-naß-Verfahren).

Welche der bevorzugten Varianten gewählt wird, richtet sich nach dem Verwendungszweck der erfindungsgemäßen Mehrschichtlackierungen ML. So wird insbesondere die zweite Variante bei der Automobilserienlackierung besonders bevorzugt angewandt.

Als Unidecklacke und Basislacke zur Herstellung der Unidecklackierungen BL und Basislackierungen BL kommen allen üblichen und bekannten sowie am Markt erhältlichen Lacke in Betracht. Hiervon werden vorzugsweise Wasserbasislacke verwendet. Beispiele geeigneter Wasserbasislacke sind aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747, EP-A-0 401 565, EP-B-0 730 613 oder WO 95/14721 bekannt.

Als Klarlacke zur Herstellung der Klarlackierung KL kommen alle üblichen und bekannten Einkomponenten(1K)-, Zweikomponenten(2K)- oder Mehrkomponenten(3K, 4K)-Klarlacke, Pulverklarlacke, Pulverslurry-Klarlacke oder UV-härtbaren Klarlacke in Betracht.

Beispiele geeigneter bekannter Einkomponenten(IK)-, Zweikomponenten(2K)- oder Mehrkomponenten(3K, 4K)-Klarlacke sind aus den Patentschriften DE-A-42 04 518, US-A-5,474,811, US-A-5,356,669, US-A-5,605,965, WO 94/10211, WO 94/10212, WO 94/10213, EP-A-0 594 068, EP-A-0 594 071, EP-A-0 594 142, EP-A-0 604 992, WO 94/22969, EP-A-0 596 460 oder WO 92/22615 bekannt.

Einkomponenten(1K)-Klarlacke enthalten bekanntermaßen hydroxylgruppenhaltige Bindemittel und Vernetzungsmittel wie blockierte Polyisocyanate, Tris(alkoxycarbonylamino)triazine und/oder Aminoplastharze. In einer weiteren Variante enthalten sie als Bindemittel Polymere mit seitenständigen Carbamatund/oder Allophanatgruppen und carbamat- und/oder allophanatmodifizerte Aminoplastharze als Vernetzungsmittel (vgl. US-A-5,474,811, US-A-5,356,669, US-A-5,605,965, WO 94/10211, WO 94/10212, WO 94/10213, EP-A-0 594 068, EP-A-0 594 071 oder EP-A-0 594 142).

Zweikomponenten(2K)- oder Mehrkomponenten(3K, 4K)-Klarlacke enthalten als wesentliche Bestandteile bekanntermaßen hydroxylgruppenhaltige Bindemittel und Polyisocyanate als Vernetzungsmittel, welche bis zu ihrer Verwendung getrennt gelagert werden.

Beispiele geeigneter Pulverklarlacke sind beispielsweise aus der deutschen Patentschrift DE-A-42 22 194 oder der Produkt-Information der Firma BASF Lacke + Farben AG, "Pulverlacke", 1990 bekannt.

Pulverklarlacke enthalten als wesentliche Bestandteile bekanntermaßen epoxidgruppenhaltige Bindemittel und Polycarbonsäuren als Vernetzungsmittel.

Beispiele geeigneter Pulverslurry-Klarlacke sind beispielsweise aus der US-Patentschrift US-A-4,268,542 und den deutschen Patentanmeldungen DE-A-195 18 392.4 und DE-A-196 13 547 bekannt oder werden in der nicht vorveröffentlichten deutschen Patentanmeldung DE-A-198 14 471.7 beschrieben.

Pulverslurry-Klarlacke enthalten bekanntermaßen Pulverklarlacke in einem wäßrigen Medium dispergiert.

UV-härtbare Klarlacke gehen beispielsweise aus den Patentschriften EP-A-0 540 884, EP-A- 0 568 967 oder US-A-4,675,234 hervor.

Demzufolge können die erfindungsgemäßen Mehrschichtlackierungen ML einen unterschiedlichen Aufbau aufweisen.

In einer ersten bevorzugten Variante der erfindungsgemäßen Mehrschichtlackierung ML liegen
(1) die mechanische Energie absorbierende Füllerschicht FL und
(2) die farb- und/oder effektgebende Decklackierung DL
in der angegebenen Reihenfolge übereinander.

In der zweiten bevorzugten Variante der erfindungsgemäßen Mehrschichtlackierung ML liegen
(1) eine mechanische Energie absorbierende Füllerschicht FL,
(2) eine farb- und/oder effektgebende Basislackierung BL und
(3) eine Klarlackierung KL
in der angegebenen Reihenfolge übereinander.

Hierbei kann die Klarlackierung KL noch mit einer hochkratzfesten Beschichtung wie beispielsweise einem organisch modifizierten Keramikmaterial versehen werden.

Bei dem erfindungsgemäßen Verfahren werden die Decklackschicht, Basislackschicht und Klarlackschicht in einer Naßschichtdicke appliziert, daß nach ihrer Aushärtung Schichten DL, BL und KL mit der für ihre Funktionen notwendigen und vorteilhaften Schichtdicken resultieren. Im Falle der Decklackierung DL liegt sie bei 5 bis 90, vorzugsweise 10 bis 80, besonders bevorzugt 15 bis 60, und insbesondere 20 bis 50 µm, im Falle der Basislackierung BL liegt sie bei 5 bis 50, vorzugsweise 10 bis 40, besonders bevorzugt 12 bis 30 und insbesondere 15 bis 25 µm, und im Falle der Klarlackierungen KL liegt sie bei 10 bis 100, vorzugsweise 15 bis 80, besonders bevorzugt 20 bis 70 und insbesondere 25 bis 60 µm.

Die erfindungsgemäßen Mehrschichtlackierungen ML weisen aufgrund der besonders vorteilhaften Eigenschaften der erfindungsgemäßen Füllerschichten und Steinschlagschutzgrundierungen FL ein hervorragendes Eigenschaftsprofil auf, das hinsichtlich der Mechanik, Optik, Korrosionsbeständigkeit und Haftung sehr gut ausgewogen ist. So weisen die erfindungsgemäßen Mehrschichtlackierungen ML die vom Markt geforderte hohe optische Qualität und Zwischenschichthaftung auf und werfen keine Probleme wie mangelnde Schwitzwasserbeständigkeit der Füllerschichten FL, Rißbildung (mudcracking) in den Basislackierungen BL oder Verlaufsstörungen oder Oberflächenstrukturen in den Klarlackierungen KL mehr auf. Insbesondere weist die erfindungsgemäße Mehrschichtlackierung ML einen hervorragenden Metallic-Effekt, einen hervorragenden D.O.I. (depth of image) und eine hervorragende Oberflächenglätte auf.

Nicht zuletzt erweist es sich aber als ganz besonderer Vorteil, daß mit Hilfe des erfindungsgemäßen Beschichtungsstoffs und des erfindungsgemäßen Verfahrens in einfacher Weise eine Mehrschichtlackierung ML realisiert werden kann, welche ausschließlich auf wäßrigen Beschichtungsstoffen und gegebenenfalls pulverförmigen Beschichtungsstoffen basiert.

### Beispiele

### Herstellbeispiel 1

### Die Herstellung einer Dispersion eines Copolymerisats (A)

In einem Stahlreaktor, wie er üblicherweise für die Herstellung von Dispersionen verwendet wird, ausgestattet mit einem Rührer, einem Rückflußkühler und 3 Zulaufgefäßen wurden 52,563 Gewichtsteile VE-Wasser vorgelegt und auf 90 °C erhitzt. In dem ersten Zulaufgefäß, wurden 10,182 Gewichtsteile Acrylsäure, 18,345 Gewichtsteile Methylmethacrylat und 1,493 Gewichtsteile Diphenylethylen vorgelegt. In dem zweiten Zulaufgefäß wurden 9,914 Gewichtsteile 25 prozentige Ammoniaklösung vorgelegt. In dem dritten Zulaufgefäß wurden 5,25 Gewichtsteile VE-Wasser und 2,253 Gewichtsteilen Ammoniumperoxodisulfat vorgelegt. Unter intensivem Rühren der Vorlage im Stahlreaktor wurden die drei Zuläufe gleichzeitig gestartet. Der erste und zweite Zulauf wurden innerhalb einer Stunde zudosiert. Der dritte Zulauf wurde innerhalb 1,25 Stunden zudosiert. Das resultierende Reaktionsgemisch wurde während vier Stunden bei 90 °C gehalten und anschließend auf unter 40 °C abgekühlt und durch einen 100 µm-GAF-Beutel abfiltriert. Die resultierende Dispersion wies einen Festkörpergehalt von 32 bis 34 Gew.-% (1 Stunde, 130 °C) und einen Gehalt an freien Monomeren von weniger als 0,2 Gew.-% (bestimmt durch Gaschromatographie) auf.

Die Dispersion (A) wurde für die Herstellung eines Blockmischpolymerisats (A) verwendet

### Herstellbeispiel 2

### Die Herstellung einer Dispersion eines Blockmischpolymerisats (A)

In einem Stahlreaktor, wie er üblicherweise für die Herstellung von Dispersionen verwendet wird, ausgestattet mit einem Rührer, einem Rückflußkühler und einem Zulaufgefäß wurden 51,617 Gewichtsteile VE-Wasser und 9,907 Gewichtsteile der Dispersion gemäß Herstellbeispiel 1 vorgelegt und unter Rühren auf 90 °C erhitzt. Hiernach wurde aus dem Zulaufgefäß innerhalb sechs Stunden eine Mischung aus 9,856 Gewichtsteile n-Butylmethacrylat, 7,884 Gewichtsteile Styrol, 12,661 Gewichtsteile Hydroxyethylmethacrylat und 8,885 Gewichtsteile Ethylhexylmethacrylat hinzu dosiert. Die resultierende Reaktionsmischung wurde während zwei Stunden bei 90 °C gerührt. Anschließend wurde die resultierende Dispersion unter 40 °C abgekühlt und durch einen 50 µm-GAF-Beutel abfiltriert. Die Dispersion (A) wies einen Festkörpergehalt von 41 bis 42 Gew.-% (1 Stunde, 130 °C) und einem Gehalt an freien Monomeren von weniger als 0,2 Gew.-% (bestimmt durch Gaschromatographie) auf.

### Beispiel 1

### 1.1 Die Herstellung eines Füllers, enthaltend den Bestandteil (A)

### 1.1.1 Die Herstellung der Pigmentpaste

Für die Herstellung des Füllers wurde zunächst eine Pigmentpaste aus 3,8 Gewichtsteilen Flammruß, 32,87 Gewichtsteilen Bariumsulfat (Blanc Fixe® Super-F), 1,73 Gewichtsteilen Talkum, 1,04 Gewichtsteilen Additol® XW395 (handelsübliches Netzmittel) und 60,56 Gewichtsteile der Dispersion (A) gemäß Herstellbeispiel 2 hergestellt. Die Mischung wurde während zehn Minuten in einem Dissolver vordispergiert und anschließend auf einer Sandmühle auf eine Hegmann-Feinheit < 15 µm gemahlen. Die Viskosität der Paste lag bei 160 mPas bei einer Scherrate von 100 s ⁻¹ und 23 °C.

### 1.1.2 Die Herstellung des Füllers

Der Füller wurde durch Vermischen von 57,8 Gewichtsteilen der Pigmentpaste gemäß Beispiel 1.1.1 und 30 Gewichtsteilen der Dispersion (A) gemäß Herstellbeispiels 2 hergestellt. Er wies eine Viskosität von 122 mPas bei einer Scherrate von 100 s ⁻¹ und 23 °C. Mit Wasser wurde der Füller auf einer Spritzviskosität von 55 mPas eingestellt.

### 1.1.3 Anwendungstechnische Eigenschaften

Der Füller gemäß Beispiele 1.1.2 wurde auf Glasplatten aufgerakelt. Nach der thermischen Härtung unter verschiedenen Bedingungen wurden die resultierenden Füllerschichten der Pendeldämpfungs-Prüfung nach DIN 1987-01 unterzogen (vgl.

Römpp Lexikon Lacke und Druckfarben, Georg Thieme Verlag, 1998, Seite 436). Es wurden die folgenden Ergebnisse erhalten:
Thermische Härtung während 20 Minuten bei 100 °C: 81 Schwingungen.
Thermische Härtung während 20 Minuten bei 130 °C: 105 Schwingungen.

Die Ergebnisse zeigen, daß schon bei niedrigen Einbrenntemperaturen Füllerschichten einer brauchbaren Härte resultieren.

### Beispiel 2

### Die Herstellung erfindungsgemäßer Mehrschichtlackierungen ML

Für die Herstellung der erfindungsgemäßen Mehrschichtlackierungen ML wurden übliche und bekannte Prüftafeln aus Stahl verwendet, welche mit einer Elektrotauchlackierung, hergestellt aus einem handelsüblichen kathodischen Elektrotauchlack, beschichtet waren.

Die Prüftafeln wurden mit dem Füller gemäß Beispiel 1.1 pneumatisch beschichtet. Die resultierenden Füllerschichten wurden während zehn Minuten bei Raumtemperatur und während zehn Minuten bei 80 °C vorgetrocknet. Hiernach wurde sie
- bei Beispiel 2.1 während 20 Minuten bei 100 °C und
- bei Beispiel 2.2 während 20 Minuten bei 130 °C
eingebrannt. Es resultierte in beiden Fällen eine Füllerschicht FL einer Schichtdicke von 35 µm.

Auf die Füllerschichten FL der Beispiele 2.1 und 2.2 wurde ein handelsüblicher konventioneller Unidecklack (FD05-313X von BASF Coatings AG) pneumatisch appliziert und während 30 Minuten bei 140°C eingebrannt. Die Unidecklackierungen DL der resultierenden erfindungsgemäßen Mehrschichtlackierungen ML wiesen eine Schichtdicke von 30 µm auf.

Die in dieser Weise hergestellten erfindungsgemäßen Mehrschichtlackierungen ML wiesen beide einen hervorragenden optischen Gesamteindruck und eine hervorragende Oberflächenglätte auf. Die Zwischenschichthaftung sowohl zwischen den Füllerschichten FL und den Elektrotauchlackierungen und den Füllerschicht FL und den Unidecklackierungen DL nach zehntätiger Belastung unter den Bedingungen des Schwitzwasser-Konstantklima (SKK)-Tests nach DIN 50017 war gut (bestimmt mit Hilfe der Gitterschnittprüfung nach DIN ISO 2409: 1994-10: Note 1). Sowohl der Steinschlagschutz nach dem Steinschlagtest unter Multi-Stoßbelastung als auch unter Einzelstoß-Belastung (vgl. auch Römpp Lexikon Lacke und Druckfarben, Georg Thieme Verlag, 1998, Seite 540) war gut.

Die Versuchsergebnisse belegen erneut, daß bereits bei einer Einbrenntemperatur von 100°C erfindungsgemäße Füllerschichten FL mit guten anwendungstechnischen Eigenschaften resultieren.

## Patentansprüche

1. Verwendung eines Copolymerisats (A), herstellbar durch radikalische Polymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I
**R**^{**1**}**R**^{**2**}**C=CR**^{**3**}**R**^{**4**} (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R², R³ und R⁴ für substituierte oder unsubstituierte Aryl-, Arylalkyl- oder Arylcycloalkylreste, insbesondere substituierte oder unsubstituierte Arylreste, stehen;
in einem wäßrigen Medium, in einem Beschichtungsstoff, der der Herstellung von Füllerschichten und Steinschlagschutzgrundierungen dient.

2. Beschichtungsstoff, enthaltend
A) als Bindemittel mindestens ein Copolymerisat, das durch radikalische Polymerisation von
a) mindestens einem olefinisch ungesättigten Monomer und
b) mindestens einem vom olefinisch ungesättigten Monomer (a) verschiedenen olefinisch ungesättigten Monomer der allgemeinen Formel I
**R**^{**1**}**R**^{**2**}**C=CR**^{**3**}**R**^{**4**} (I),
worin die Reste R¹, R², R³ und R⁴ jeweils unabhängig voneinander für Wasserstoffatome oder substituierte oder unsubstituierte Alkyl-, Cycloalkyl-, Alkylcycloalkyl-, Cycloalkylalkyl-, Aryl-, Alkylaryl-, Cycloalkylaryl- Arylalkyl- oder Arylcycloalkylreste stehen, mit der Maßgabe, daß mindestens zwei der Variablen R¹, R² , R³ und R⁴ für substituierte oder unsubstituierte Aryl-, Arylalkyl- oder Arylcycloalkylreste, insbesondere substituierte oder unsubstituierte Arylreste, stehen;
in einem wäßrigen Medium herstellbar ist;
und
B) mindestens ein Pigment und/oder einen Füllstoff, wobei das Pigment/Bindemittel-Verhältnis (B) : (A) bei 4 : 1 bis 1 : 4 liegt.

3. Die Verwendung nach Anspruch 1 und der Beschichtungsstoff nach Anspruch 2, **dadurch gekennzeichnet, daß** das Copolymerisat (A) erhältlich ist, indem man
(i) mindestens ein Monomer (a) und mindestens ein Monomer (b) in einem wäßrigen Medium radikalisch polymerisiert, wonach man
(ii) das resultierende Umsetzungsprodukt mit mindestens einem weiteren Monomer (a) unter radikalischen Bedingungen umsetzt.

4. Die Verwendung nach Anspruch 1 oder 3 und der Beschichtungsstoff nach Anspruch 2 oder 3, **dadurch gekennzeichnet, daß** es sich bei den Arylresten R¹, R², R³ und/oder R⁴ der Verbindung (b) um Phenyl- oder Naphthylreste, insbesondere Phenylreste, handelt.

5. Die Verwendung nach einem der Ansprüche 1, 3 oder 4 und der Beschichtungsstoff nach einem der Ansprüche 2 bis 4, **dadurch gekennzeichnet, daß** die Substituenten in den Resten R¹, R², R³ und/oder R⁴ der Verbindung (b) elektronenziehende oder elektronenschiebende Atome oder organische Reste, insbesondere Halogenatome, Nitril-, Nitro-, partiell oder vollständig halogenierte Alkyl-, Cycloalkyl-, Alkylcycloalkyl-, Cycloalkylalkyl-, Aryl-, Alkylaryl-, Cycloalkylaryl- Arylalkyl- und Arylcycloalkylreste; Aryloxy-, Alkyloxy- und Cycloalkyloxyreste; Arylthio-, Alkylthio- und Cycloalkylthioreste; Hydroxylgruppen und/oder primäre, sekundäre und/oder tertiäre Aminogruppen sind.

6. Die Verwendung nach einem der Ansprüche 1 oder 3 bis 5 und der Beschichtungsstoff nach einem der Ansprüche 2 bis 5, **dadurch gekennzeichnet, daß** als Monomere (a)
a1) im wesentlichen säuregruppenfreie (Meth)acrylsäureester;
a2) Monomere, welche mindestens eine Hydroxylgruppe, Aminogruppe, Alkoxymethylaminogruppe oder Iminogruppe pro Molekül tragen und im wesentlichen säuregruppenfrei sind;
a3) Monomere, welche mindestens eine Säuregruppe, die in die entsprechende Säureaniongruppe überführbar ist, pro Molekül tragen;
a4) Vinylester von in alpha-Stellung verzweigten Monocarbonsäuren mit 5 bis 18 Kohlenstoffatome im Molekül;
a5) Umsetzungsprodukte aus Acrylsäure und/oder Methacrylsäure mit dem Glycidylester einer in alpha-Stellung verzweigten Monocarbonsäure mit 5 bis 18 C-Atomen je Molekül;
a6) cyclische und/oder acyclische Olefine;
a7) (Meth)Acrylsäureamide;
a8) Epoxidgruppen enthaltende Monomere;
a9) vinylaromatische Kohlenwasserstoffe;
a10) Nitrile;
a11) Vinylverbindungen, insbesondere Vinyl- und/oder Vinylidendihalogenide, N-Vinylpyrrolidon, Vinylether und/oder Vinylester;
a12) Allylverbindungen, insbesondere Allylether und -ester;
a13) Polysiloxanmakromonomere, die ein zahlenmittleres Molekulargewicht Mn von 1.000 bis 40.000 und im Mittel 0,5 bis 2,5 ethylenisch ungesättigte Doppelbindungen pro Molekül aufweisen; und/oder
a14) Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder cycloalkylestern der (Meth)Acrylsäure (Monomere a2);
verwendet werden.

7. Die Verwendung nach einem der Ansprüche 1 oder 3 bis 6 und der Beschichtungsstoff nach einem der Ansprüche 2 bis 6, **dadurch gekennzeichnet, daß** der Beschichtungsstoff mindestens einen der nachfolgenden Bestandteile enthält:
A) mindestens ein von dem Copolymerisat (A) verschiedenes Bindemittel mit mindestens einer funktionellen Gruppe (afg), welche mit komplementären funktionellen Gruppen (cfg) im Vernetzungsmittel (C) thermische Vernetzungsreaktionen eingehen kann;
C) mindestens ein Vernetzungsmittel mit mindestens zwei funktionellen Gruppen (cfg), welche mit komplementären funktionellen Gruppen (afg) im Bestandteil (A) thermische Vernetzungsreaktionen eingehen können,
D) mindestens einen Bestandteil, welcher mit aktinischer Strahlung vernetztbar ist,
E) mindestens einen Photoinitiator,
F) mindestens einen Initiator der thermischen Vernetzung,
G) mindestens einen mit aktinischer Strahlung und/oder thermisch härtbaren Reaktivverdünner;
H) mindestens ein Lackadditiv und/oder
I) mindestens ein organisches Lösemittel

8. Verfahren zur Herstellung einer farb- und/oder effektgebenden Mehrschichtlackierung ML auf einem grundierten oder ungrundierten Substrat durch
(I) Herstellen einer Füllerlackschicht durch Applikation eines Füllers auf das Substrat,
(II) Härtung der Füllerlackschicht, wodurch die Füllerschicht FL resultiert,
(III) Herstellen einer Unidecklackschicht durch Applikation eines Unidecklacks auf die Füllerschicht FL und
(IV) Härtung der Unidecklackschicht DL, wodurch die Unidecklackierung DL resultiert,
oder
(I) Herstellen einer Füllerlackschicht durch Applikation eines Füllers auf das Substrat,
(II) Härtung der Füllerlackschicht, wodurch die Füllerschicht FL resultiert,
(III) Herstellen einer Basislackschicht durch Applikation eines Basislacks auf die Füllerschicht FL,
(IV) Trocknen der Basislackschicht,
(V) Herstellen einer Klarlackschicht durch Applikation eines Klarlacks auf die Basislackschicht und
(VI) gemeinsame Härtung der Basislackschicht und der Klarlackschicht, wodurch die Basislackierung BL und die Klarlackierung KL resultieren,
**dadurch gekennzeichnet, daß** als Füller der Beschichtungsstoff gemäß einem der Ansprüche 2 bis 7 verwendet wird.

9. Farb- und/oder effektgebende Mehrschichtlackierung ML für ein grundiertes oder ungrundiertes Substrat, enthaltend in der angegebenen Reihenfolge übereinanderliegend
(1) eine mechanische Energie absorbierende Füllerschicht FL und
(2) eine farb- und/oder effektgebende Decklackierung DL
oder
(1) eine mechanische Energie absorbierende Füllerschicht FL,
(2) eine farb- und/oder effektgebende Basislackierung BL und
(3) eine Klarlackierung KL
**dadurch gekennzeichnet, daß** die Füllerschicht FL mit dem Beschichtungsstoff gemäß einem der Ansprüche 2 bis 7 hergestellt wird.

10. Verwendung der Mehrschichtlackierung ML gemäß Anspruch 9 oder des Verfahrens gemäß Anspruch 8 für die Automobilerst- und - reparaturlackierung, die industrielle Lackierung, inclusive Coil Coating und Container Coating, die Kunststofflackierung und die Möbellackierung.

11. Grundierte oder ungrundierte Substrate, enthaltend mindestens eine Mehrschichtlackierung ML gemäß Anspruch 9 oder mindestens eine nach dem Verfahren gemäß Anspruch 8 hergestellte Mehrschichtlackierung ML.

## Claims

1. The use of a copolymer (A) preparable by free-radical polymerization of
a) at least one olefinically unsaturated monomer and
b) at least one olefinically unsaturated monomer different than the olefinically unsaturated monomer (a) and of the general formula I
**R**^{**1**}**R**^{**2**}**C=CR**^{**3**}**R**^{**4**} (I),
in which the radicals R¹, R², R³ and R⁴ each independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³ and R⁴ are substituted or unsubstituted aryl, arylalkyl, or arylcycloalkyl radicals, especially substituted or unsubstituted aryl radicals,
in an aqueous medium, in a coating material used to produce surfacer coats and antistonechip primer coats.

2. A coating material comprising
A) as binder at least one copolymer preparable by free-radical polymerization of
a) at least one olefinically unsaturated monomer and
b) at least one olefinically unsaturated monomer different than the olefinically unsaturated monomer (a) and of the general formula I
**R**^{**1**}**R**^{**2**}**C=CR**^{**3**}**R**^{**4**} (I),
in which the radicals R¹, R², R³ and R⁴ each independently of one another are hydrogen atoms or substituted or unsubstituted alkyl, cycloalkyl, alkylcycloalkyl, cycloalkylalkyl, aryl, alkylaryl, cycloalkylaryl, arylalkyl or arylcycloalkyl radicals, with the proviso that at least two of the variables R¹, R², R³ and R⁴ are substituted or unsubstituted aryl, arylalkyl or arylcycloalkyl radicals, especially substituted or unsubstituted aryl radicals,
in an aqueous medium;
and
(B) at least one pigment and/or filler, the pigment/binder ratio (B):(A) being from 4:1 to 1:4.

3. The use as claimed in claim 1 or coating material as claimed in claim 2, wherein the copolymer (A) is obtainable by
(i) subjecting at least one monomer (a) and at least one monomer (b) to free-radical polymerization in an aqueous medium, and then
(ii) reacting the resultant reaction product with at least one further monomer (a) under free-radical conditions.

4. The use as claimed in claim 1 or 3 or coating material as.claimed in claim 2 or 3, wherein the aryl radicals R¹, R², R³ and/or R⁴ of the compound (b) comprise phenyl or naphthyl radicals, especially phenyl radicals.

5. The use as claimed in any of claims 1, 3 and 4 or coating material as claimed in any of claims 2 to 4, wherein the substituents in radicals R¹, R², R³ and/or R⁴ of the compound (b) are electron-donating or electron-withdrawing atoms or organic radicals, especially halogen atoms, nitrile, nitro, partially or fully halogenated alkyl, cycloalkyl, alkylcycloalkyl, cycloalkylalkyl,. aryl, alkylaryl, cycloalkylaryl, arylalkyl and arylcycloalkyl radicals; aryloxy, alkyloxy and cycloalkyloxy radicals; arylthio, alkylthio and cycloalkylthio radicals; hydroxyl groups and/or primary, secondary and/or tertiary amino groups.

6. The use as claimed in any of claims 1 and 3 to 5 or coating material as claimed in any of claims 2 to 5, wherein monomers (a) comprise
a1) (meth)acrylic esters which are essentially free from acid groups;
a2) monomers which carry per molecule at least one hydroxyl group, amino group, alkoxymethylamino group or imino group and are essentially free from acid groups;
a3) monomers which carry per molecule at least one acid group which can be converted to the corresponding acid anion group;
a4) vinyl esters of alpha-branched monocarboxylic acids having 5 to 18 carbon atoms in the molecule;
a5) reaction products of acrylic acid and/or methacrylic acid with the glycidyl ester of an alpha-branched monocarboxylic acid having 5 to 18 carbon atoms per molecule;
a6) cyclic and/or acyclic olefins;
a7) (meth)acrylamides;
a8) monomers containing epoxide groups;
a9) vinylaromatic hydrocarbons;
a10) nitriles;
a11) vinyl compounds, especially vinyl halides and/or vinylidene dihalides, N-vinylpyrrolidone, vinyl ethers and/or vinyl esters;
a12) allyl compounds, especially allyl ethers and allyl esters;
a13) polysiloxane macromonomers having a number-average molecular weight Mn of from 1000 to 40,000 and having on average from 0.5 to 2.5 ethylenically unsaturated double bonds per molecule; and/or
a14) acryloxysilane-containing vinyl monomers, preparable by reacting hydroxyl-functional silanes with epichlorohydrin and then reacting the reaction product with (meth)acrylic acid and/or hydroxyalkyl and/or hydroxycycloalkyl esters of (meth)acrylic acid (monomers a2).

7. The use as claimed in any of claims 1 and 3 to 6 or coating material as claimed in any of claims 2 to 6, wherein the coating material comprises at least one of the following constituents:
A) at least one binder different than the copolymer (A) and containing at least one functional group (afg) which is able to undergo thermal crosslinking reactions with complementary functional groups (cfg) in the crosslinking agent (C);
C) at least one crosslinking agent containing at least two functional groups (cfg) which are able to undergo thermal crosslinking reactions with complementary functional groups (afg) in the constituent (A),
D) at least one constituent which is crosslinkable with actinic radiation,
E) at least one photoinitiator,
F) at least one thermal crosslinking initiator,
G) at least one reactive diluent curable thermally and/or with actinic radiation,
H) at least one coatings additive, and/or
I) at least one organic solvent.

8. A process for producing a multicoat color and/or effect coating system ML on a primed or unprimed substrate by
(I) preparing a surfacer film by applying a surfacer to the substrate,
(II) curing the surfacer film to give the surfacer coat FL,
(III) preparing a solid-color topcoat film by applying a solid-color topcoat material to the surfacer coat FL, and
(IV) curing the solid-color topcoat film to give the solid-color topcoat DL,
or
(I) preparing a surfacer film by applying a surfacer to the substrate,
(II) curing the surfacer film to give the surfacer coat FL,
(III) preparing a basecoat film by applying a basecoat material to the surfacer coat FL,
(IV) drying the basecoat film,
(V) preparing a clearcoat film by applying a clearcoat material to the basecoat film, and
(VI) jointly curing the basecoat film and the clearcoat film to give the basecoat BL and the clearcoat KL,
in which the coating material as claimed in any of claims 2 to 7 is used as surfacer.

9. A multicoat color and/or effect coating system ML for a primed or unprimed substrate, comprising - situated above one another in the stated sequence -
(1) a surfacer coat FL which absorbs mechanical energy, and
(2) a color and/or effect topcoat DL
or
(1) a surfacer coat FL which absorbs mechanical energy,
(2) a color and/or effect basecoat BL, and
(3) a clearcoat KL,
wherein the surfacer coat FL is produced with the coating material as claimed in any of claims 2 to 7.

10. The use of the multicoat system ML as claimed in claim 9, or of the process as claimed in claim 8 for automotive OEM finishing and refinishing, industrial coating, including coil coating and container coating, the coating of plastics, and furniture coating.

11. A primed or unprimed substrate comprising at least one multicoat system ML as claimed in claim 9 or at least one multicoat system ML produced by the process as claimed in claim 8.

## Revendications

1. Utilisation d'un copolymère (A), pouvant être préparé par polymérisation radicalaire dans un milieu aqueux
a) d'au moins un monomère oléfiniquement insaturé et
b) d'au moins un monomère oléfiniquement insaturé, différent du monomère oléfiniquement insaturé (a) , de formule générale I
R¹R²C=CR³R⁴ (I),
dans laquelle les radicaux R¹, R², R³ et R⁴ représentent, à chaque fois indépendamment l'un de l'autre, des atomes d'hydrogène ou des radicaux alkyle, cycloalkyle, alkylcycloalkyle, cycloalkylalkyle, aryle, alkylaryle, cycloalkylaryle, arylalkyle ou arylcycloalkyle substitués ou non substitués, à condition qu'au moins deux des variables R¹, R², R³ et R⁴ représentent des radicaux aryle, arylalkyle ou arylcycloalkyle substitués ou non substitués, en particulier des radicaux aryle substitués ou non substitués ;
dans un produit de revêtement qui sert à la préparation de couches de charge et d'apprêts résistants aux impacts de gravillons.

2. Produit de revêtement, contenant
A) comme liant au moins un copolymère pouvant être préparé par polymérisation radicalaire dans un milieu aqueux
a) d'au moins un monomère oléfiniquement insaturé et
b) d'au moins un monomère oléfiniquement insaturé, différent du monomère oléfiniquement insaturé (a), de formule générale I
R¹R²C=CR³R⁴ (I),
dans laquelle les radicaux R¹, R², R³ et R⁴ représentent, à chaque fois indépendamment l'un de l'autre, des atomes d'hydrogène ou des radicaux alkyle, cycloalkyle, alkylcycloalkyle, cycloalkylalkyle, aryle, alkylaryle, cycloalkylaryle, arylalkyle ou arylcycloalkyle substitués ou non substitués, à condition qu'au moins deux des variables R¹, R², R³ et R⁴ représentent des radicaux aryle, arylalkyle ou arylcycloalkyle substitués ou non substitués, en particulier des radicaux aryle substitués ou non substitués ;
et
B) au moins un pigment et/ou une charge, le rapport pigment/liant (B):(A) étant de 4:1 à 1:4.

3. Utilisation selon la revendication 1 et produit de revêtement selon la revendication 2,
**caractérisés en ce que** le copolymère (A) peut être obtenu
(i) en polymérisant par voie radicalaire au moins un monomère (a) et au moins un monomère (b) en milieu aqueux, puis
(ii) en transformant le produit de transformation obtenu avec au moins un autre monomère (a) dans des conditions radicalaires.

4. Utilisation selon la revendication 1 ou 3 et produit de revêtement selon la revendication 2 ou 3, **caractérisés en ce qu'**il s'agit, pour les radicaux aryle R¹, R², R³ et/ou R⁴ du composé (b) de radicaux phényle ou naphtyle, en particulier de radicaux phényle.

5. Utilisation selon l'une quelconque des revendications 1, 3 ou 4 et produit de revêtement selon l'une quelconque des revendications 2 à 4, **caractérisés en ce que** les substituants dans les radicaux R¹, R², R³ et/ou R⁴ du composé (b) sont des atomes ou des radicaux organiques attracteurs d'électrons ou déplaçant les électrons, en particulier des atomes d'halogène, des radicaux nitrile, nitro, des radicaux alkyle, cycloalkyle, alkylcycloalkyle, cycloalkylalkyle, aryle, alkylaryle, cycloalkylaryle, arylalkyle et arylcycloalkyle partiellement ou totalement halogénés ; des radicaux aryloxy, alkyloxy et cycloalkyloxy ; des radicaux arylthio, alkylthio et cycloalkylthio ; des groupements hydroxyle et/ou des groupements amino primaires, secondaires et/ou tertiaires.

6. Utilisation selon l'une quelconque des revendications 1 ou 3 à 5 et produit de revêtement selon l'une quelconque des revendications 2 à 5, **caractérisés en ce qu'**on utilise, comme monomères (a)
a1) des esters de l'acide (méth)acrylique essentiellement exempts de groupements acides ;
a2) des monomères qui portent, par molécule, au moins un groupement hydroxyle, amino, alcoxyméthylamino ou imino et qui sont essentiellement exempts de groupements acides;
a3) des monomères qui portent, par molécule, au moins un groupement acide qui peut être transformé en groupement anionique acide correspondant ;
a4) des esters vinyliques d'acides monocarboxyliques, ramifiés en position alpha, comprenant 5 à 18 atomes de carbone dans la molécule;
a5) des produits de transformation de l'acide acrylique et/ou méthacrylique avec l'ester glycidylique d'un acide monocarboxylique ramifié en position alpha comprenant 5 à 18 atomes de carbone par molécule ;
a6) des oléfines cycliques et/ou acycliques ;
a7) des amides de l'acide (méth)acrylique ;
a8) des monomères contenant des groupements époxyde ;
a9) des hydrocarbures vinylaromatiques ;
a10) des nitriles ;
a11) des composés de vinyle, en particulier les dihalogénures de vinyle et/ou de vinylidène, la N-vinylpyrrolidone, les vinyléthers et/ou les esters de vinyle ;
a12) des composés d'allyle, en particulier les allyléthers et les esters d'allyle ;
a13) les macromonomères de polysiloxane, qui présentent un poids moléculaire numérique moyen Mn de 1000 à 40 000 et en moyenne 0,5 à 2,5 doubles liaisons éthyléniquement insaturées par molécule et/ou
a14) des monomères de vinyle contenant acryloxysilane, pouvant être préparés par transformation de silanes à fonctionnalité hydroxy avec de l'épichlorhydrine et transformation consécutive du produit de réaction avec de l'acide (méth)acrylique et/ou des esters hydroxyalkyliques et/ou cycloalkyliques de l'acide (méth)acrylique (monomères a2).

7. Utilisation selon l'une quelconque des revendications 1 ou 3 à 6 et produit de revêtement selon l'une quelconque des revendications 2 à 6, **caractérisés en ce que** le produit de revêtement contient au moins un des constituants suivants :
A) au moins un liant différent du copolymère (A), présentant au moins un groupement fonctionnel (afg) qui peut participer à des réactions de réticulation thermique avec les groupements fonctionnels (cfg) complémentaires dans le réticulant (C) ;
C) au moins un réticulant comprenant au moins deux groupements fonctionnels (cfg) qui peuvent participer à des réactions de réticulation thermique avec les groupements fonctionnels (afg) complémentaires dans le constituant (A)
D) au moins un constituant qui est réticulable par rayonnement actinique,
E) au moins un photo-initiateur,
F) au moins un initiateur de la réticulation thermique,
G) au moins un diluant réactif durcissable par rayonnement actinique et/ou thermiquement ;
H) au moins un additif pour laques et/ou
I) au moins un solvant organique.

8. Procédé pour la préparation d'un laquage à plusieurs couches ML procurant une teinte et/ou un effet sur un substrat apprêté ou non apprêté par
(I) préparation d'une couche de laque chargée par application d'une charge sur le substrat,
(II) durcissement de la couche de laque chargée, ce qui résulte dans la couche chargée FL,
(III) préparation d'une couche de laque de recouvrement uniforme par l'application d'une laque de recouvrement uniforme sur la couche chargée FL et
(IV) durcissement de la couche de laque de recouvrement uniforme DL, ce qui résulte dans le laquage de recouvrement uniforme DL,
ou
(I) préparation d'une couche de laque chargée par application d'une charge sur le substrat,
(II) durcissement de la couche de laque chargée, ce qui résulte dans la couche chargée FL,
(III) préparation d'une couche de laque de base par application d'une laque de base sur la couche chargée FL,
(IV) séchage de la couche de laque de base,
(V) préparation d'une couche de laque claire par application d'une laque claire sur la couche de laque de base et
(VI) durcissement commun de la couche de laque de base et de la couche de laque claire, ce qui résulte dans le laquage de base BL et le laquage clair KL,
**caractérisé en ce qu'**on utilise comme charge le produit de revêtement selon l'une quelconque des revendications 2 à 7.

9. Laquage à plusieurs couches ML procurant une teinte et/ou un effet pour un substrat apprêté ou non apprêté, contenant dans l'ordre indiqué, l'un sur l'autre,
(1) une couche chargée FL absorbant l'énergie mécanique et
(2) un laquage de recouvrement DL procurant une teinte et/ou un effet ou
(1) une couche chargée FL absorbant l'énergie mécanique,
(2) un laquage de base BL procurant une teinte et/ou un effet et
(3) un laquage clair KL
**caractérisé en ce que** la couche chargée FL est réalisée avec le produit de revêtement selon l'une quelconque des revendications 2 à 7.

10. Utilisation du laquage à plusieurs couches ML selon la revendication 9 ou du procédé selon la revendication 8 pour le premier laquage et le laquage de réparation de voitures, le laquage industriel, y compris le revêtement de bandes et de conteneurs, le laquage de matériaux synthétiques et le laquage de meubles.

11. Substrats apprêtés ou non apprêtés, présentant au moins un laquage à plusieurs couches ML selon la revendication 9 ou au moins un laquage à plusieurs couches ML préparé par le procédé selon la revendication 8.
